# EUROPEAN PATENT SPECIFICATION

(11) **EP 4 449 695 B1**
(45) Date of publication and mention of the grant of the patent: **15.07.2026**
(21) Application number: 22847501.8
(22) Date of filing: 12.12.2022
(51) Int. Cl.: H04L 51/214, H04L 67/306

(54) **CONTEXT-AWARE MESSAGING SYSTEM**
KONTEXTBEWUSSTES NACHRICHTENÜBERMITTLUNGSSYSTEM
SYSTÈME DE MESSAGERIE SENSIBLE AU CONTEXTE

(30) Priority: 15.12.2021 US 202117644520
(43) Date of publication of application: 23.10.2024
(60) Divisional application: 26156472.8
(73) Proprietor: Snap Inc., Santa Monica, California 90405 (US)
(72) Inventor: KRATZ, Sven, Santa Monica, CA 90405 (US); VAISH, Rajan, Santa Monica, CA 90405 (US); THAM, Yu, Jiang, Santa Monica, CA 90405 (US); SMITH, Brian, Anthony, Santa Monica, CA 90405 (US); MONROY-HERNÁNDEZ, Andrés, Santa Monica, CA 90405 (US)
(74) Representative: Mathys & Squire
(86) International application number: PCT/US2022/081348
(87) International publication number: WO 2023/114708

(56) References cited:
- US-A1- 2015 341 290

## Description

### CLAIM OF PRIORITY

### TECHNICAL FIELD

The present disclosure generally relates to mobile and wearable computing technology. In particular, examples of the present disclosure address systems, methods, and user interfaces for context-aware messaging.

### BACKGROUND

Users in today's hyper-connected world receive several messages throughout the day, every day. In many contexts, receiving messages can be inappropriate, distracting, unwanted or even dangerous (e.g., when driving a vehicle). Most modern mobile devices have several user-defined settings that define the device's message forwarding behavior, such as, "silent mode" or "night mode" or "do not disturb," and many devices also allow manual per-application configuration of notification delivery. However, these existing mechanisms are either very coarse or very labor intensive to configure.

US 2015/341290 A1 describes an approach for delivering messages to a user based on their activity status.

### BRIEF DESCRIPTION OF THE DRAWINGS

To easily identify the discussion of any particular element or act, the most significant digit or digits in a reference number refer to the figure number in which that element or act is first introduced.
**FIG. 1** is a diagrammatic representation of a networked environment in which the present disclosure may be deployed, in accordance with some examples.
**FIG. 2** is a diagrammatic representation of a messaging system, according to examples, that has both client-side and server-side functionality.
**FIG. 3** is a diagrammatic representation of a data structure as maintained in a database, according to examples.
**FIG. 4** is a diagrammatic representation of a message, according to examples.
**FIG. 5** is a flowchart for an access-limiting process, according to examples.
**FIG. 6** is a conceptual diagram illustrating interactions between components of a context-aware system in generating and using a user context profile for message delivery, according to examples.
**FIGs. 7** **and** **8** are flowcharts illustrating operations of the messaging system in performing a method for context-aware inbound message delivery, according to examples.
**FIG. 9** is a flowchart illustrating operations of the messaging system in performing a method for context-aware outbound message delivery, according to examples
**FIG. 10** is a block diagram illustrating a representative software architecture, which may be used in conjunction with various hardware architectures herein described, according to examples.
**FIG. 11** is a block diagram illustrating components of a machine able to read instructions from a machine-readable medium (e.g., a machine-readable storage medium) and perform any one or more of the methodologies discussed herein, according to examples.

### DETAILED DESCRIPTION

The description that follows includes systems, methods, techniques, instruction sequences, and computing machine program products that embody illustrative examples of the disclosure. In the following description, for the purposes of explanation, numerous specific details are set forth in order to provide an understanding of various embodiments of the inventive subject matter. It will be evident, however, to those skilled in the art, that embodiments of the inventive subject matter may be practiced without these specific details. In general, well-known instruction instances, protocols, structures, and techniques are not necessarily shown in detail.

As noted above, there are many cases when receiving messages can be problematic. A conventional approach used by traditional messaging systems to solve this problem is to provide various message filters that can be configured by the user manually. However, generally, the more options that are provided to a user, the longer it will take for the user to decide which option to select. Further, manually fine-tuning message filters to the user's preferences and behaviors can be tedious and time consuming.

Aspects of the present disclosure include systems, methods, techniques, instruction sequences, and computing machine program products to address the deficiencies of such traditional messaging systems by learning from a user's context and inferring an optimized list of context profiles for the user that define contexts in which receiving messages is appropriate. Each context profile can combine multiple message filters (e.g., time, location, activity) to control message delivery for the user, thereby greatly improving the user experience in using and configuring a messaging system.

As a compliment to the forgoing, once context profiles have been generated and enabled, the system monitors the user's context actively and enforces the policies defined in the user context profiles to deliver the messages to the user. That is, in instances in which a message is sent to a user during a context for which the system determines it is inappropriate to send the message to the user, the system will hold the message for delivery during a different context. The system may further provide a notification to the sending user that the message was not delivered. The notification may further include a suggestion for a different context in which to send the message to the user, or an option for the sending user to allow the messaging system to deliver the message to the user once a different context is detected.

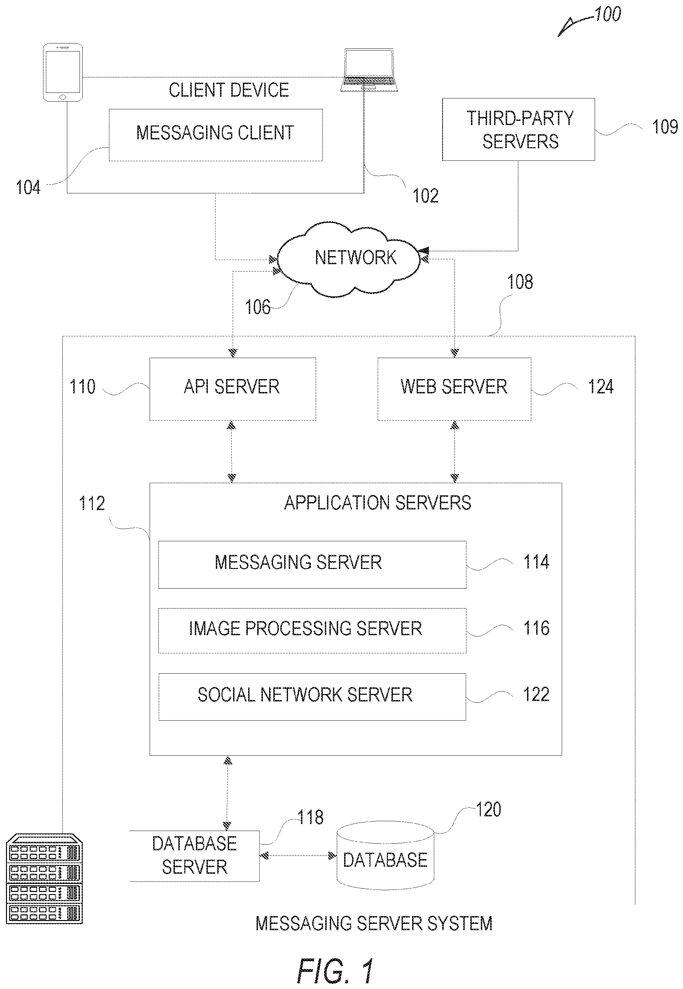

**FIG. 1** is a block diagram showing an example messaging system 100 for exchanging data (e.g., messages and associated content) over a network. The messaging system 100 includes multiple instances of a client device 102, each of which hosts a number of applications, including a messaging client 104 and other applications.

In an example, the client device 102 may include or correspond to a wearable device (e.g., smart glasses) worn by a user that includes a camera and optical elements that include a transparent display through which the real-world environment is visible to the user. The wearable device may be a stand-alone client device that is capable of independent operation or may be a companion device that works with a primary device to offload intensive processing and/or exchange data over a network with a messaging server system 108. The wearable device may include various components common to mobile electronic devices such as a display controller for controlling display of visual media (including photographic and video content captured by the camera) on a display mechanism incorporated in the device.

Each messaging client 104 is communicatively coupled to other instances of the messaging client 104 (e.g., hosted on respective other client devices 102), a messaging server system 108, and third-party servers 109 via a network 106 (e.g., the Internet). A messaging client 104 can also communicate with locally hosted applications using Applications Program Interfaces (APIs).

A messaging client 104 is able to communicate and exchange data with other messaging clients 104 and with the messaging server system 108 via the network 106. The data exchanged between messaging clients 104, and between a messaging client 104 and the messaging server system 108, includes functions (e.g., commands to invoke functions) as well as payload data (e.g., text, audio, video or other multimedia data).

The messaging server system 108 provides server-side functionality via the network 106 to a particular messaging client 104. While certain functions of the messaging system 100 are described herein as being performed by either a messaging client 104 or by the messaging server system 108, the location of certain functionality either within the messaging client 104 or the messaging server system 108 may be a design choice. For example, it may be technically preferable to initially deploy certain technology and functionality within the messaging server system 108 but to later migrate this technology and functionality to the messaging client 104 where a client device 102 has sufficient processing capacity.

The messaging server system 108 supports various services and operations that are provided to the messaging client 104. Such operations include transmitting data to, receiving data from, and processing data generated by the messaging client 104. This data may include message content, client device information, geolocation information, media augmentation and overlays, message content persistence conditions, social network information, and live event information, as examples. Data exchanges within the messaging system 100 are invoked and controlled through functions available via user interfaces (UIs) of the messaging client 104.

Turning now specifically to the messaging server system 108, an Application Program Interface (API) server 110 is coupled to, and provides a programmatic interface to, application servers 112. The application servers 112 are communicatively coupled to a database server 118, which facilitates access to a database 120 that stores data associated with messages processed by the application servers 112. Similarly, a web server 124 is coupled to the application servers 112, and provides web-based interfaces to the application servers 112. To this end, the web server 124 processes incoming network requests over the Hypertext Transfer Protocol (HTTP) and several other related protocols.

The Application Program Interface (API) server 110 receives and transmits message data (e.g., commands and message payloads) between the client device 102 and the application servers 112. Specifically, the API server 110 provides a set of interfaces (e.g., routines and protocols) that can be called or queried by the messaging client 104 in order to invoke functionality of the application servers 112. The Application Program Interface (API) server 110 exposes various functions supported by the application servers 112, including account registration, login functionality, the sending of messages, via the application servers 112, from a particular messaging client 104 to another messaging client 104, the sending of media files (e.g., images or video) from a messaging client 104 to a messaging server 114, and for possible access by another messaging client 104, the settings of a collection of media data (e.g., story), the retrieval of a list of friends of a user of a client device 102, the retrieval of such collections, the retrieval of messages and content, the addition and deletion of entities (e.g., friends) to an entity graph (e.g., a social graph), the location of friends within a social graph, and opening an application event (e.g., relating to the messaging client 104).

The application servers 112 host a number of server applications and subsystems, including for example a messaging server 114, an image processing server 116, and a social network server 122. The messaging server 114 implements a number of message processing technologies and functions, particularly related to the aggregation and other processing of content (e.g., textual and multimedia content) included in messages received from multiple instances of the messaging client 104. As will be described in further detail, the text and media content from multiple sources may be aggregated into collections of content (e.g., called stories or galleries). These collections are then made available to the messaging client 104. Other processor and memory intensive processing of data may also be performed server-side by the messaging server 114, in view of the hardware requirements for such processing.

The application servers 112 also include an image processing server 116 that is dedicated to performing various image processing operations, typically with respect to images or video within the payload of a message sent from or received at the messaging server 114.

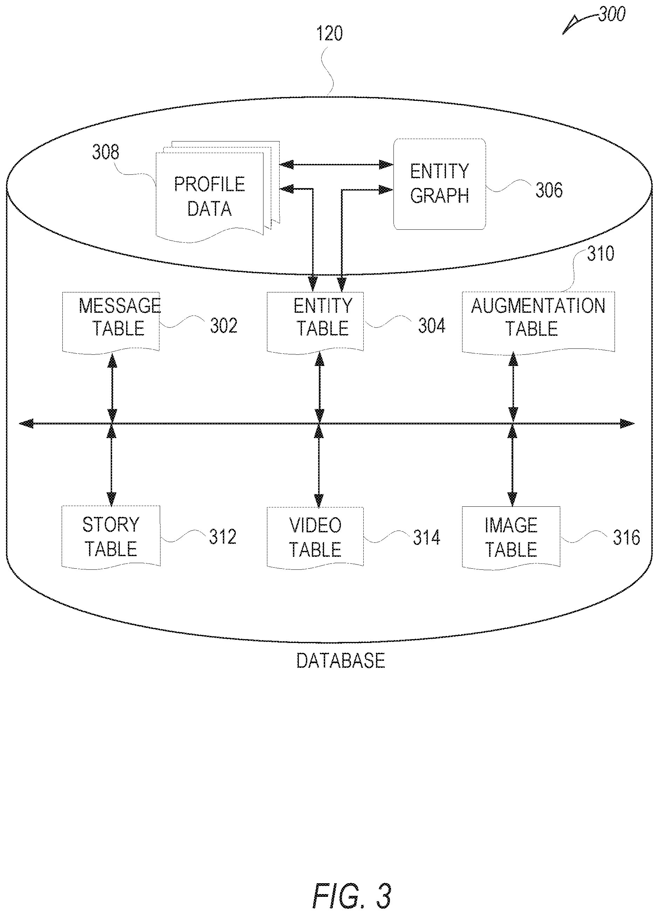

The social network server 122 supports various social networking functions and services and makes these functions and services available to the messaging server 114. To this end, the social network server 122 maintains and accesses an entity graph 306 (as shown in FIG. 3) within the database 120. Examples of functions and services supported by the social network server 122 include the identification of other users of the messaging system 100 with which a particular user has relationships or is "following," and also the identification of other entities and interests of a particular user.

Returning to the messaging client 104, features and functions of an external resource (e.g., an application or applet) are made available to a user via an interface of the messaging client 104. In this context, "external" refers to the fact that the application or applet is external to the messaging client 104. The external resource is often provided by a third party but may also be provided by the creator or provider of the messaging client 104. The messaging client 104 receives a user selection of an option to launch or access features of such an external resource. The external resource may be the application installed on the client device 102 (e.g., a "native app"), or a small-scale version of the application (e.g., an "applet") that is hosted on the client device 102 or remote of the client device 102 (e.g., on third-party servers 109). The small-scale version of the application includes a subset of features and functions of the application (e.g., the full-scale, native version of the application) and is implemented using a markup-language document. In one example, the small-scale version of the application (e.g., an "applet") is a web-based, markup-language version of the application and is embedded in the messaging client 104. In addition to using markup-language documents (e.g., a .*ml file), an applet may incorporate a scripting language (e.g., a .*js file or a .json file) and a style sheet (e.g., a . * ss file).

In response to receiving a user selection of the option to launch or access features of the external resource, the messaging client 104 determines whether the selected external resource is a web-based external resource or a locally-installed application. In some cases, applications that are locally installed on the client device 102 can be launched independently of and separately from the messaging client 104, such as by selecting an icon, corresponding to the application, on a home screen of the client device 102. Small-scale versions of such applications can be launched or accessed via the messaging client 104 and, in some examples, no or limited portions of the small-scale application can be accessed outside of the messaging client 104. The small-scale application can be launched by the messaging client 104 receiving, from a third-party server for example, a markup-language document associated with the small-scale application and processing such a document.

In response to determining that the external resource is a locally-installed application, the messaging client 104 instructs the client device 102 to launch the external resource by executing locally-stored code corresponding to the external resource. In response to determining that the external resource is a web-based resource, the messaging client 104 communicates with the third-party servers 109 (for example) to obtain a markup-language document corresponding to the selected external resource. The messaging client 104 then processes the obtained markup-language document to present the web-based external resource within a user interface of the messaging client 104.

The messaging client 104 can notify a user of the client device 102, or other users related to such a user (e.g., "friends"), of activity taking place in one or more external resources. For example, the messaging client 104 can provide participants in a conversation (e.g., a chat session) in the messaging client 104 with notifications relating to the current or recent use of an external resource by one or more members of a group of users. One or more users can be invited to join in an active external resource or to launch a recently-used but currently inactive (in the group of friends) external resource. The external resource can provide participants in a conversation, each using respective messaging clients 104, with the ability to share an item, status, state, or location in an external resource with one or more members of a group of users into a chat session. The shared item may be an interactive chat card with which members of the chat can interact, for example, to launch the corresponding external resource, view specific information within the external resource, or take the member of the chat to a specific location or state within the external resource. Within a given external resource, response messages can be sent to users on the messaging client 104. The external resource can selectively include different media items in the responses, based on a current context of the external resource.

The messaging client 104 can present a list of the available external resources (e.g., applications or applets) to a user to launch or access a given external resource. This list can be presented in a context-sensitive menu. For example, the icons representing different ones of the application (or applets) can vary based on how the menu is launched by the user (e.g., from a conversation interface or from a non-conversation interface).

Working in conjunction, the messaging client 104 and the application servers 112 can provide augmented reality (AR) experiences to users of the messaging system100. An AR experience includes application of virtual content to real-world environments whether through presentation of the virtual content by transparent displays through which a real-world environment is visible or through augmenting image data to include the virtual content overlaid on real-world environments depicted therein. The virtual content may comprise one or more AR content items. An AR content item may include audio content, visual content or a visual effect. Examples of audio and visual content include pictures, texts, logos, animations, and sound effects. The audio and visual content or the visual effects can be applied to media data such as a live image stream.

Data and various systems using AR content items or other such transform systems to modify content using this data can involve detection of objects (e.g., faces, hands, bodies, cats, dogs, surfaces, objects, etc.), tracking of such objects as they leave, enter, and move around the field of view in video frames, and the modification or transformation of such objects as they are tracked. In various embodiments, different methods for achieving such transformations may be used. For example, some embodiments may involve generating a three-dimensional mesh model of the object or objects, and using transformations and animated textures of the model within the video to achieve the transformation. In other embodiments, tracking of points on an object may be used to place an image or texture (which may be two dimensional or three dimensional) at the tracked position. In still further embodiments, neural network analysis of video frames may be used to place images, models, or textures in content (e.g., images or frames of video). AR content items thus refer both to the images, models, and textures used to create transformations in content, as well as to additional modeling and analysis information needed to achieve such transformations with object detection, tracking, and placement.

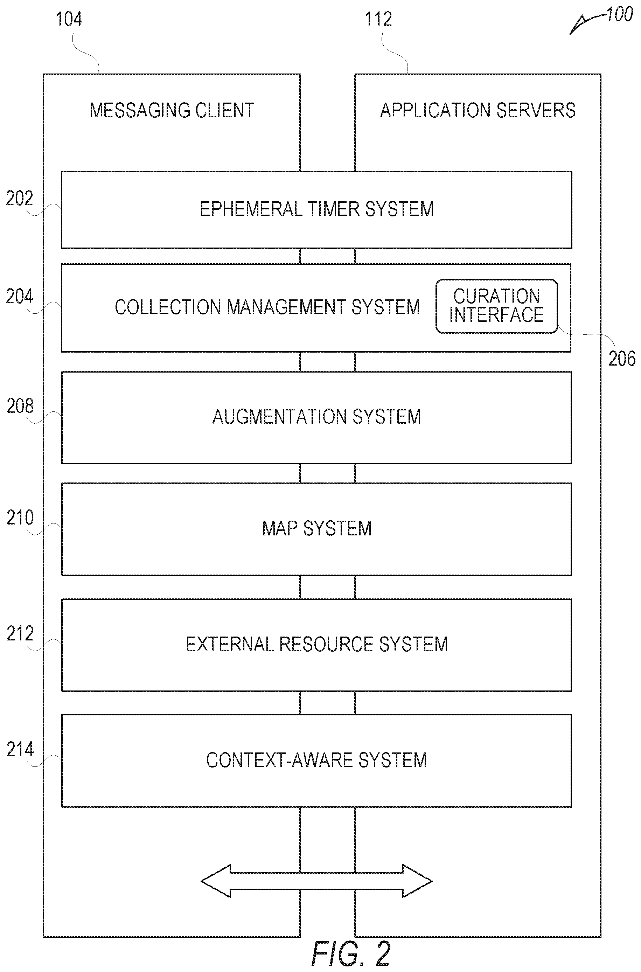

**FIG. 2** is a block diagram illustrating further details regarding the messaging system 100, according to some examples. Specifically, the messaging system 100 is shown to comprise the messaging client 104 and the application servers 112. The messaging system 100 embodies a number of subsystems, which are supported on the client-side by the messaging client 104 and on the sever-side by the application servers 112. These subsystems include, for example, an ephemeral timer system 202, a collection management system 204, an augmentation system 208, a map system 210, an external resource system 212, and a context-aware system 214.

The ephemeral timer system 202 is responsible for enforcing temporary or time-limited access to content by the messaging client 104 and the messaging server 114. The ephemeral timer system 202 incorporates a number of timers that, based on duration and display parameters associated with a message, or collection of messages (e.g., a story), selectively enable access (e.g., for presentation and display) to messages and associated content via the messaging client 104. Further details regarding the operation of the ephemeral timer system 202 are provided below.

The collection management system 204 is responsible for managing sets or collections of media (e.g., collections of text, image video, and audio data). A collection of content (e.g., messages, including images, video, text, and audio) may be organized into an "event gallery" or an "event story." Such a collection may be made available for a specified time period, such as the duration of an event to which the content relates. For example, content relating to a music concert may be made available as a "story" for the duration of that music concert. The collection management system 204 may also be responsible for publishing an icon that provides notification of the existence of a particular collection to the user interface of the messaging client 104.

The collection management system 204 furthermore includes a curation interface 206 that allows a collection manager to manage and curate a particular collection of content. For example, the curation interface 206 enables an event organizer to curate a collection of content relating to a specific event (e.g., delete inappropriate content or redundant messages). Additionally, the collection management system 204 employs machine vision (or image recognition technology) and content rules to automatically curate a content collection. In certain examples, compensation may be paid to a user for the inclusion of user-generated content into a collection. In such cases, the collection management system 204 operates to automatically make payments to such users for the use of their content.

The augmentation system 208 provides various functions that enable a user to augment (e.g., annotate or otherwise modify or edit) media content associated with a message. For example, the augmentation system 208 provides functions related to the generation and publishing of media overlays for messages processed by the messaging system 100. The augmentation system 208 operatively supplies a media overlay or augmentation (e.g., an image filter) to the messaging client 104 based on a geolocation of the client device 102. In another example, the augmentation system 208 operatively supplies a media overlay to the messaging client 104 based on other information, such as social network information of the user of the client device 102. A media overlay may include audio and visual content and visual effects. Examples of audio and visual content include pictures, texts, logos, animations, and sound effects. An example of a visual effect includes color overlaying. The audio and visual content or the visual effects can be applied to a media content item (e.g., a photo) at the client device 102. For example, the media overlay may include text or image that can be overlaid on top of a photograph taken by the client device 102. In another example, the media overlay includes an identification of a location overlay (e.g., Venice beach), a name of a live event, or a name of a merchant overlay (e.g., Beach Coffee House). In another example, the augmentation system 208 uses the geolocation of the client device 102 to identify a media overlay that includes the name of a merchant at the geolocation of the client device 102. The media overlay may include other indicia associated with the merchant. The media overlays may be stored in the database 120 and accessed through the database server 118.

In some examples, the augmentation system 208 provides a user-based publication platform that enables users to select a geolocation on a map and upload content associated with the selected geolocation. The user may also specify circumstances under which a particular media overlay should be offered to other users. The augmentation system 208 generates a media overlay that includes the uploaded content and associates the uploaded content with the selected geolocation.

In other examples, the augmentation system 208 provides a merchant-based publication platform that enables merchants to select a particular media overlay associated with a geolocation via a bidding process. For example, the augmentation system 208 associates the media overlay of the highest bidding merchant with a corresponding geolocation for a predefined amount of time.

The map system 210 provides various geographic location functions, and supports the presentation of map-based media content and messages by the messaging client 104. For example, the map system 210 enables the display of user icons or avatars (e.g., stored in profile data 308) on a map to indicate a current or past location of "friends" of a user, as well as media content (e.g., collections of messages including photographs and videos) generated by such friends, within the context of a map. For example, a message posted by a user to the messaging system 100 from a specific geographic location may be displayed within the context of a map at that particular location to "friends" of a specific user on a map interface of the messaging client 104. A user can furthermore share his or her location and status information (e.g., using an appropriate status avatar) with other users of the messaging system 100 via the messaging client 104, with this location and status information being similarly displayed within the context of a map interface of the messaging client 104 to selected users.

The external resource system 212 provides an interface for the messaging client 104 to communicate with remote servers (e.g. third-party servers 109) to launch or access external resources, i.e. applications or applets. Each third-party server hosts, for example, a markup language (e.g., HTML5) based application or small-scale version of an application (e.g., game, utility, payment, or ride-sharing application). The messaging client 104 may launch a web-based resource (e.g., application) by accessing the HTML5 file from the third-party servers 109 associated with the web-based resource. In certain examples, applications hosted by third-party servers 109 are programmed in JavaScript leveraging a Software Development Kit (SDK) provided by the messaging server 114. The SDK includes Application Programming Interfaces (APIs) with functions that can be called or invoked by the web-based application. In certain examples, the messaging server 114 includes a JavaScript library that provides a given external resource access to certain user data of the messaging client 104. HTML5 is used as an example technology for programming games, but applications and resources programmed based on other technologies can be used.

In order to integrate the functions of the SDK into the web-based resource, the SDK is downloaded by a third-party server from the messaging server 114 or is otherwise received by the third-party server. Once downloaded or received, the SDK is included as part of the application code of a web-based external resource. The code of the web-based resource can then call or invoke certain functions of the SDK to integrate features of the messaging client 104 into the web-based resource.

The SDK stored on the messaging server 114 effectively provides the bridge between an external resource (e.g., applications or applets and the messaging client 104). This provides the user with a seamless experience of communicating with other users on the messaging client 104, while also preserving the look and feel of the messaging client 104. To bridge communications between an external resource and a messaging client 104, in certain examples, the SDK facilitates communication between third-party servers 109 and the messaging client 104. In certain examples, a WebViewJavaScriptBridge running on a client device 102 establishes two one-way communication channels between an external resource and the messaging client 104. Messages are sent between the external resource and the messaging client 104 via these communication channels asynchronously. Each SDK function invocation is sent as a message and callback. Each SDK function is implemented by constructing a unique callback identifier and sending a message with that callback identifier.

By using the SDK, not all information from the messaging client 104 is shared with third-party servers 109. The SDK limits which information is shared based on the needs of the external resource. In certain examples, each third-party server provides an HTML5 file corresponding to the web-based external resource to the messaging server 114. The messaging server 114 can add a visual representation (such as a box art or other graphic) of the web-based external resource in the messaging client 104. Once the user selects the visual representation or instructs the messaging client 104 through a GUI of the messaging client 104 to access features of the web-based external resource, the messaging client 104 obtains the HTML5 file and instantiates the resources necessary to access the features of the web-based external resource.

The messaging client 104 presents a graphical user interface (e.g., a landing page or title screen) for an external resource. During, before, or after presenting the landing page or title screen, the messaging client 104 determines whether the launched external resource has been previously authorized to access user data of the messaging client 104. In response to determining that the launched external resource has been previously authorized to access user data of the messaging client 104, the messaging client 104 presents another graphical user interface of the external resource that includes functions and features of the external resource. In response to determining that the launched external resource has not been previously authorized to access user data of the messaging client 104, after a threshold period of time (e.g., 3 seconds) of displaying the landing page or title screen of the external resource, the messaging client 104 slides up (e.g., animates a menu as surfacing from a bottom of the screen to a middle of or other portion of the screen) a menu for authorizing the external resource to access the user data. The menu identifies the type of user data that the external resource will be authorized to use. In response to receiving a user selection of an accept option, the messaging client 104 adds the external resource to a list of authorized external resources and allows the external resource to access user data from the messaging client 104. In some examples, the external resource is authorized by the messaging client 104 to access the user data in accordance with an OAuth 2 framework.

The messaging client 104 controls the type of user data that is shared with external resources based on the type of external resource being authorized. For example, external resources that include full-scale applications (e.g., an application) are provided with access to a first type of user data (e.g., only two-dimensional avatars of users with or without different avatar characteristics). As another example, external resources that include small-scale versions of applications (e.g., web-based versions of applications) are provided with access to a second type of user data (e.g., payment information, two-dimensional avatars of users, three-dimensional avatars of users, and avatars with various avatar characteristics). Avatar characteristics include different ways to customize a look and feel of an avatar, such as different poses, facial features, clothing, and so forth.

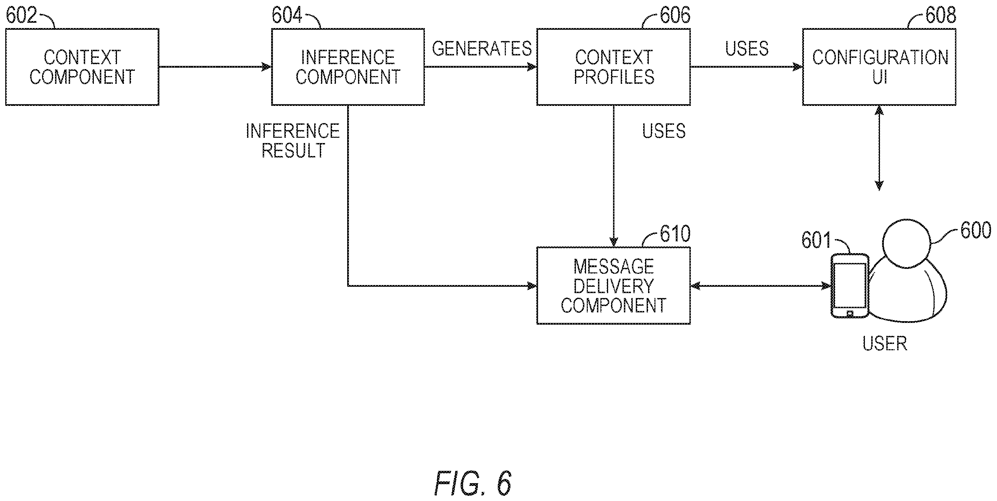

The context-aware system 214 is responsible for context-aware delivery of messages to users of the messaging system 100. To this end, the context-aware system 214 gathers context information about users, generates user context profiles based on contexts inferred from the context information, and uses the user context profiles to deliver messages to users in appropriate contexts for receiving messages. Further details regarding the components of the context-aware system 214 and its function are discussed below in reference to **FIGs. 6-8****.**

**FIG. 3** is a schematic diagram illustrating data structures 300, which may be stored in the database 120 of the messaging server system 108, according to certain examples. While the content of the database 120 is shown to comprise a number of tables, it will be appreciated that the data could be stored in other types of data structures (e.g., as an object-oriented database).

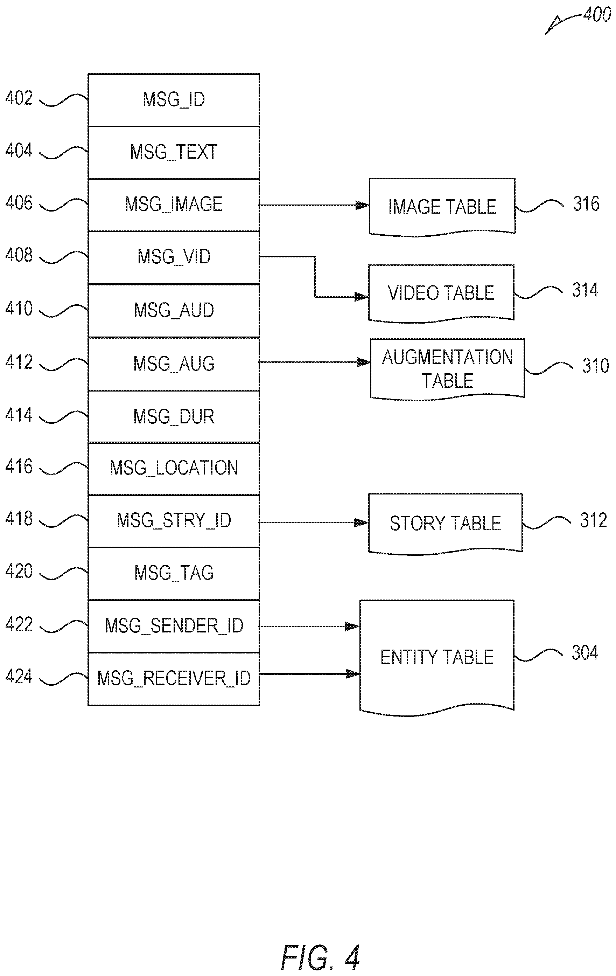

The database 120 includes message data stored within a message table 302. This message data includes, for any particular one message, at least message sender data, message recipient (or receiver) data, and a payload. Further details regarding information that may be included in a message, and included within the message data stored in the message table 302, are described below with reference to **FIG. 4****.**

An entity table 304 stores entity data, and is linked (e.g., referentially) to an entity graph 306 and profile data 308. Entities for which records are maintained within the entity table 304 may include individuals, corporate entities, organizations, objects, places, events, and so forth. Regardless of entity type, any entity regarding which the messaging server system 108 stores data may be a recognized entity. Each entity is provided with a unique identifier, as well as an entity type identifier (not shown).

The entity graph 306 stores information regarding relationships and associations between entities. Such relationships may be social, professional (e.g., work at a common corporation or organization) interested-based or activity-based, merely for example.

The profile data 308 stores multiple types of profile data about a particular entity. The profile data 308 may be selectively used and presented to other users of the messaging system 100, based on privacy settings specified by a particular entity. Where the entity is an individual, the profile data 308 includes, for example, a user name, telephone number, address, settings (e.g., notification and privacy settings), as well as a user-selected avatar representation (or collection of such avatar representations). A particular user may then selectively include one or more of these avatar representations within the content of messages communicated via the messaging system 100, and on map interfaces displayed by messaging clients 104 to other users. The collection of avatar representations may include "status avatars," which present a graphical representation of a status or activity that the user may select to communicate at a particular time.

Where the entity is a group, the profile data 308 for the group may similarly include one or more avatar representations associated with the group, in addition to the group name, members, and various settings (e.g., notifications) for the relevant group.

The database 120 also stores augmentation data, such as overlays or filters, in an augmentation table 310. The augmentation data is associated with and applied to videos (for which data is stored in a video table 314) and images (for which data is stored in an image table 316).

Filters, in one example, are overlays that are displayed as overlaid on an image or video during presentation to a recipient user. Filters may be of various types, including user-selected filters from a set of filters presented to a sending user by the messaging client 104 when the sending user is composing a message. Other types of filters include geolocation filters (also known as geo-filters), which may be presented to a sending user based on geographic location. For example, geolocation filters specific to a neighborhood or special location may be presented within a user interface by the messaging client 104, based on geolocation information determined by a Global Positioning System (GPS) unit of the client device 102.

Another type of filter is a data filter, which may be selectively presented to a sending user by the messaging client 104, based on other inputs or information gathered by the client device 102 during the message creation process. Examples of data filters include current temperature at a specific location, a current speed at which a sending user is traveling, battery life for a client device 102, or the current time.

Other augmentation data that may be stored within the image table 316 includes augmented reality content items (e.g., corresponding to applying lenses or augmented reality experiences). An augmented reality content item may be a real-time special effect and sound that may be added to an image or a video.

As described above, augmentation data includes augmented reality content items, overlays, image transformations, AR images, and similar terms refer to modifications that may be applied to image data (e.g., videos or images). This includes real-time modifications, which modify an image as it is captured using device sensors (e.g., one or multiple cameras) of a client device 102 and then displayed on a screen of the client device 102 with the modifications. This also includes modifications to stored content, such as video clips in a gallery that may be modified. For example, in a client device 102 with access to multiple augmented reality content items, a user can use a single video clip with multiple augmented reality content items to see how the different augmented reality content items will modify the stored clip. For example, multiple augmented reality content items that apply different pseudorandom movement models can be applied to the same content by selecting different augmented reality content items for the content. Similarly, real-time video capture may be used with an illustrated modification to show how video images currently being captured by sensors of a client device 102 would modify the captured data. Such data may simply be displayed on the screen and not stored in memory, or the content captured by the device sensors may be recorded and stored in memory with or without the modifications (or both). In some systems, a preview feature can show how different augmented reality content items will look within different windows in a display at the same time. This can, for example, enable multiple windows with different pseudorandom animations to be viewed on a display at the same time.

Data and various systems using augmented reality content items or other such transform systems to modify content using this data can thus involve detection of objects (e.g., faces, hands, bodies, cats, dogs, surfaces, objects, etc.), tracking of such objects as they leave, enter, and move around the field of view in video frames, and the modification or transformation of such objects as they are tracked. In various examples, different methods for achieving such transformations may be used. Some examples may involve generating a three-dimensional mesh model of the object or objects, and using transformations and animated textures of the model within the video to achieve the transformation. In other examples, tracking of points on an object may be used to place an image or texture (which may be two dimensional or three dimensional) at the tracked position. In still further examples, neural network analysis of video frames may be used to place images, models, or textures in content (e.g., images or frames of video). Augmented reality content items thus refer both to the images, models, and textures used to create transformations in content, as well as to additional modeling and analysis information needed to achieve such transformations with object detection, tracking, and placement.

Real-time video processing can be performed with any kind of video data (e.g., video streams, video files, etc.) saved in a memory of a computerized system of any kind. For example, a user can load video files and save them in a memory of a device, or can generate a video stream using sensors of the device. Additionally, any objects can be processed using a computer animation model, such as a human's face and parts of a human body, animals, or non-living things such as chairs, cars, or other objects.

In some examples, when a particular modification is selected along with content to be transformed, elements to be transformed are identified by the computing device, and then detected and tracked if they are present in the frames of the video. The elements of the object are modified according to the request for modification, thus transforming the frames of the video stream. Transformation of frames of a video stream can be performed by different methods for different kinds of transformation. For example, for transformations of frames mostly referring to changing forms of an object's elements, characteristic points for each element of an object are calculated (e.g., using an Active Shape Model (ASM) or other known methods). Then, a mesh based on the characteristic points is generated for each of the at least one element of the object. This mesh is used in the following stage of tracking the elements of the object in the video stream. In the process of tracking, the mentioned mesh for each element is aligned with a position of each element. Then, additional points are generated on the mesh. A set of first points is generated for each element based on a request for modification, and a set of second points is generated for each element based on the set of first points and the request for modification. Then, the frames of the video stream can be transformed by modifying the elements of the object on the basis of the sets of first and second points and the mesh. In such method, a background of the modified object can be changed or distorted as well by tracking and modifying the background.

In some examples, transformations changing some areas of an object using its elements can be performed by calculating characteristic points for each element of an object and generating a mesh based on the calculated characteristic points. Points are generated on the mesh, and then various areas based on the points are generated. The elements of the object are then tracked by aligning the area for each element with a position for each of the at least one element, and properties of the areas can be modified based on the request for modification, thus transforming the frames of the video stream. Depending on the specific request for modification, properties of the mentioned areas can be transformed in different ways. Such modifications may involve changing color of areas; removing at least some part of areas from the frames of the video stream; including one or more new objects into areas which are based on a request for modification; and modifying or distorting the elements of an area or object. In various examples, any combination of such modifications or other similar modifications may be used. For certain models to be animated, some characteristic points can be selected as control points to be used in determining the entire state-space of options for the model animation.

In some examples of a computer animation model to transform image data using face detection, the face is detected on an image with use of a specific face detection algorithm (e.g., Viola-Jones). Then, an Active Shape Model (ASM) algorithm is applied to the face region of an image to detect facial feature reference points.

Other methods and algorithms suitable for face detection can be used. For example, in some examples, features are located using a landmark, which represents a distinguishable point present in most of the images under consideration. For facial landmarks, for example, the location of the left eye pupil may be used. If an initial landmark is not identifiable (e.g., if a person has an eyepatch), secondary landmarks may be used. Such landmark identification procedures may be used for any such objects. In some examples, a set of landmarks forms a shape. Shapes can be represented as vectors using the coordinates of the points in the shape. One shape is aligned to another with a similarity transform (allowing translation, scaling, and rotation) that minimizes the average Euclidean distance between shape points. The mean shape is the mean of the aligned training shapes.

In some examples, a search for landmarks from the mean shape aligned to the position and size of the face determined by a global face detector is started. Such a search then repeats the steps of suggesting a tentative shape by adjusting the locations of shape points by template matching of the image texture around each point and then conforming the tentative shape to a global shape model until convergence occurs. In some systems, individual template matches are unreliable, and the shape model pools the results of the weak template matches to form a stronger overall classifier. The entire search is repeated at each level in an image pyramid, from coarse to fine resolution.

A transformation system can capture an image or video stream on a client device (e.g., the client device 102) and perform complex image manipulations locally on the client device 102 while maintaining a suitable user experience, computation time, and power consumption. The complex image manipulations may include size and shape changes, emotion transfers (e.g., changing a face from a frown to a smile), state transfers (e.g., aging a subject, reducing apparent age, changing gender), style transfers, graphical element application, and any other suitable image or video manipulation implemented by a convolutional neural network that has been configured to execute efficiently on the client device 102.

In some examples, a computer animation model to transform image data can be used by a system where a user may capture an image or video stream of the user (e.g., a selfie) using a client device 102 having a neural network operating as part of a messaging client 104 operating on the client device 102. The transformation system operating within the messaging client 104 determines the presence of a face within the image or video stream and provides modification icons associated with a computer animation model to transform image data, or the computer animation model can be present as associated with an interface described herein. The modification icons include changes that may be the basis for modifying the user's face within the image or video stream as part of the modification operation. Once a modification icon is selected, the transform system initiates a process to convert the image of the user to reflect the selected modification icon (e.g., generate a smiling face on the user). A modified image or video stream may be presented in a graphical user interface displayed on the client device 102 as soon as the image or video stream is captured, and a specified modification is selected. The transformation system may implement a complex convolutional neural network on a portion of the image or video stream to generate and apply the selected modification. That is, the user may capture the image or video stream and be presented with a modified result in real-time or near real-time once a modification icon has been selected. Further, the modification may be persistent while the video stream is being captured, and the selected modification icon remains toggled. Machine taught neural networks may be used to enable such modifications.

The graphical user interface, presenting the modification performed by the transform system, may supply the user with additional interaction options. Such options may be based on the interface used to initiate the content capture and selection of a particular computer animation model (e.g., initiation from a content creator user interface). In various examples, a modification may be persistent after an initial selection of a modification icon. The user may toggle the modification on or off by tapping or otherwise selecting the face being modified by the transformation system and store it for later viewing or browse to other areas of the imaging application. Where multiple faces are modified by the transformation system, the user may toggle the modification on or off globally by tapping or selecting a single face modified and displayed within a graphical user interface. In some examples, individual faces, among a group of multiple faces, may be individually modified, or such modifications may be individually toggled by tapping or selecting the individual face or a series of individual faces displayed within the graphical user interface.

A story table 312 stores data regarding collections of messages and associated image, video, or audio data, which are compiled into a collection (e.g., a story or a gallery). The creation of a particular collection may be initiated by a particular user (e.g., each user for which a record is maintained in the entity table 304). A user may create a "personal story" in the form of a collection of content that has been created and sent/broadcast by that user. To this end, the user interface of the messaging client 104 may include an icon that is user-selectable to enable a sending user to add specific content to his or her personal story.

A collection may also constitute a "live story," which is a collection of content from multiple users that is created manually, automatically, or using a combination of manual and automatic techniques. For example, a "live story" may constitute a curated stream of user-submitted content from varies locations and events. Users whose client devices have location services enabled and are at a common location event at a particular time may, for example, be presented with an option, via a user interface of the messaging client 104, to contribute content to a particular live story. The live story may be identified to the user by the messaging client 104, based on his or her location. The end result is a "live story" told from a community perspective.

A further type of content collection is known as a "location story," which enables a user whose client device 102 is located within a specific geographic location (e.g., on a college or university campus) to contribute to a particular collection. In some examples, a contribution to a location story may require a second degree of authentication to verify that the end user belongs to a specific organization or other entity (e.g., is a student on the university campus).

As mentioned above, the video table 314 stores video data that, in one example, is associated with messages for which records are maintained within the message table 302. Similarly, the image table 316 stores image data associated with messages for which message data is stored in the entity table 304. The entity table 304 may associate various augmentations from the augmentation table 310 with various images and videos stored in the image table 316 and the video table 314.

**FIG. 4** is a schematic diagram illustrating a structure of a message 400, according to some examples, generated by a messaging client 104 for communication to a further messaging client 104 or the messaging server 114. The content of a particular message 400 is used to populate the message table 302 stored within the database 120, accessible by the messaging server 114. Similarly, the content of a message 400 is stored in memory as "in-transit" or "in-flight" data of the client device 102 or the application servers 112. A message 400 is shown to include the following example components:
- message identifier 402: a unique identifier that identifies the message 400.
- message text payload 404: text, to be generated by a user via a user interface of the client device 102, and that is included in the message 400.
- message image payload 406: image data, captured by a camera component of a client device 102 or retrieved from a memory component of a client device 102, and that is included in the message 400. Image data for a sent or received message 400 may be stored in the image table 316.
- message video payload 408: video data, captured by a camera component or retrieved from a memory component of the client device 102, and that is included in the message 400. Video data for a sent or received message 400 may be stored in the video table 314.
- message audio payload 410: audio data, captured by a microphone or retrieved from a memory component of the client device 102, and that is included in the message 400.
- message augmentation data 412: augmentation data (e.g., filters, stickers, or other annotations or enhancements) that represents augmentations to be applied to message image payload 406, message video payload 408, or message audio payload 410 of the message 400. Augmentation data for a sent or received message 400 may be stored in the augmentation table 310.
- message duration parameter 414: parameter value indicating, in seconds, the amount of time for which content of the message (e.g., the message image payload 406, message video payload 408, message audio payload 410) is to be presented or made accessible to a user via the messaging client 104.
- message geolocation parameter 416: geolocation data (e.g., latitudinal and longitudinal coordinates) associated with the content payload of the message. Multiple message geolocation parameter 416 values may be included in the payload, each of these parameter values being associated with respect to content items included in the content (e.g., a specific image into within the message image payload 406, or a specific video in the message video payload 408).
- message story identifier 418: identifier values identifying one or more content collections (e.g., "stories" identified in the story table 312) with which a particular content item in the message image payload 406 of the message 400 is associated. For example, multiple images within the message image payload 406 may each be associated with multiple content collections using identifier values.
- message tag 420: each message 400 may be tagged with multiple tags, each of which is indicative of the subject matter of content included in the message payload. For example, where a particular image included in the message image payload 406 depicts an animal (e.g., a lion), a tag value may be included within the message tag 420 that is indicative of the relevant animal. Tag values may be generated manually, based on user input, or may be automatically generated using, for example, image recognition.
- message sender identifier 422: an identifier (e.g., a messaging system identifier, email address, or device identifier) indicative of a user of the Client device 102 on which the message 400 was generated and from which the message 400 was sent.
- message receiver identifier 424: an identifier (e.g., a messaging system identifier, email address, or device identifier) indicative of a user of the client device 102 to which the message 400 is addressed.

The contents (e.g., values) of the various components of message 400 may be pointers to locations in tables within which content data values are stored. For example, an image value in the message image payload 406 may be a pointer to (or address of) a location within an image table 316. Similarly, values within the message video payload 408 may point to data stored within a video table 314, values stored within the message augmentation data 412 may point to data stored in an augmentation table 310, values stored within the message story identifier 418 may point to data stored in a story table 312, and values stored within the message sender identifier 422 and the message receiver identifier 424 may point to user records stored within an entity table 304.

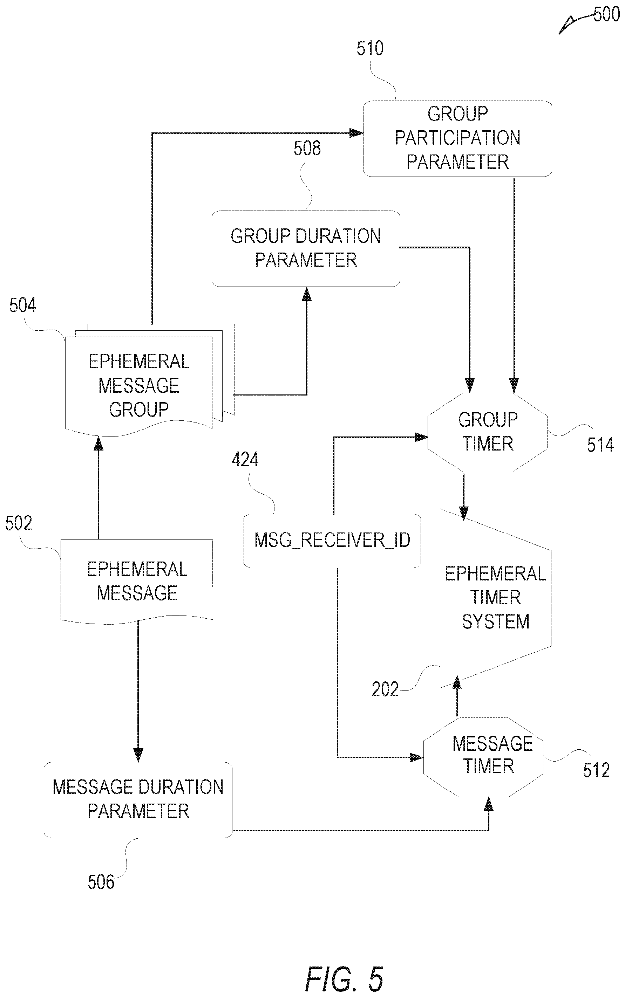

**FIG. 5** is a schematic diagram illustrating an access-limiting process 500, in terms of which access to content (e.g., an ephemeral message 502, and associated multimedia payload of data) or a content collection (e.g., an ephemeral message group 504) may be time-limited (e.g., made ephemeral).

An ephemeral message 502 is shown to be associated with a message duration parameter 506, the value of which determines an amount of time that the ephemeral message 502 will be displayed to a receiving user of the ephemeral message 502 by the messaging client 104. In one example, an ephemeral message 502 is viewable by a receiving user for up to a maximum of 10 seconds, depending on the amount of time that the sending user specifies using the message duration parameter 506.

The message duration parameter 506 and the message receiver identifier 424 are shown to be inputs to a message timer 512, which is responsible for determining the amount of time that the ephemeral message 502 is shown to a particular receiving user identified by the message receiver identifier 424. In particular, the ephemeral message 502 will only be shown to the relevant receiving user for a time period determined by the value of the message duration parameter 506. The message timer 512 is shown to provide output to a more generalized ephemeral timer system 202, which is responsible for the overall timing of display of content (e.g., an ephemeral message 502) to a receiving user.

The ephemeral message 502 is shown in FIG. 5 to be included within an ephemeral message group 504 (e.g., a collection of messages in a personal story, or an event story). The ephemeral message group 504 has an associated group duration parameter 508, a value of which determines a time duration for which the ephemeral message group 504 is presented and accessible to users of the messaging system 100. The group duration parameter 508, for example, may be the duration of a music concert, where the ephemeral message group 504 is a collection of content pertaining to that concert. Alternatively, a user (either the owning user or a curator user) may specify the value for the group duration parameter 508 when performing the setup and creation of the ephemeral message group 504.

Additionally, each ephemeral message 502 within the ephemeral message group 504 has an associated group participation parameter 510, a value of which determines the duration of time for which the ephemeral message 502 will be accessible within the context of the ephemeral message group 504. Accordingly, a particular ephemeral message group 504 may "expire" and become inaccessible within the context of the ephemeral message group 504, prior to the ephemeral message group 504 itself expiring in terms of the group duration parameter 508. The group duration parameter 508, group participation parameter 510, and message receiver identifier 424 each provide input to a group timer 514, which operationally determines, firstly, whether a particular ephemeral message 502 of the ephemeral message group 504 will be displayed to a particular receiving user and, if so, for how long. Note that the ephemeral message group 504 is also aware of the identity of the particular receiving user as a result of the message receiver identifier 424.

Accordingly, the group timer 514 operationally controls the overall lifespan of an associated ephemeral message group 504, as well as an individual ephemeral message 502 included in the ephemeral message group 504. In one example, each and every ephemeral message 502 within the ephemeral message group 504 remains viewable and accessible for a time period specified by the group duration parameter 508. In a further example, a certain ephemeral message 502 may expire, within the context of ephemeral message group 504, based on a group participation parameter 510. Note that a message duration parameter 506 may still determine the duration of time for which a particular ephemeral message 502 is displayed to a receiving user, even within the context of the ephemeral message group 504. Accordingly, the message duration parameter 506 determines the duration of time that a particular ephemeral message 502 is displayed to a receiving user, regardless of whether the receiving user is viewing that ephemeral message 502 inside or outside the context of an ephemeral message group 504.

The ephemeral timer system 202 may furthermore operationally remove a particular ephemeral message 502 from the ephemeral message group 504 based on a determination that it has exceeded an associated group participation parameter 510. For example, when a sending user has established a group participation parameter 510 of 24 hours from posting, the ephemeral timer system 202 will remove the relevant ephemeral message 502 from the ephemeral message group 504 after the specified 24 hours. The ephemeral timer system 202 also operates to remove an ephemeral message group 504 when either the group participation parameter 510 for each and every ephemeral message 502 within the ephemeral message group 504 has expired, or when the ephemeral message group 504 itself has expired in terms of the group duration parameter 508.

In certain use cases, a creator of a particular ephemeral message group 504 may specify an indefinite group duration parameter 508. In this case, the expiration of the group participation parameter 510 for the last remaining ephemeral message 502 within the ephemeral message group 504 will determine when the ephemeral message group 504 itself expires. In this case, a new ephemeral message 502, added to the ephemeral message group 504, with a new group participation parameter 510, effectively extends the life of an ephemeral message group 504 to equal the value of the group participation parameter 510.

Responsive to the ephemeral timer system 202 determining that an ephemeral message group 504 has expired (e.g., is no longer accessible), the ephemeral timer system 202 communicates with the messaging system 100 (and, for example, specifically the messaging client 104) to cause an indicium (e.g., an icon) associated with the relevant ephemeral message group 504 to no longer be displayed within a user interface of the messaging client 104. Similarly, when the ephemeral timer system 202 determines that the message duration parameter 506 for a particular ephemeral message 502 has expired, the ephemeral timer system 202 causes the messaging client 104 to no longer display an indicium (e.g., an icon or textual identification) associated with the ephemeral message 502.

**FIG. 6** is a conceptual diagram illustrating interactions between components of the context-aware system 214 in generating and using user context profiles for message delivery, according to examples. As shown, a context component 602 aggregates context information that describes one or more aspects of one or more contexts of user 600. A "context" as used herein includes one or more aspects that describe a status of a user. Accordingly, a context can comprise any one or more of a time (including a specific time, a time range, a date, a day of the week, or the like), a location, or an activity (e.g., sleeping, driving, exercising, walking, working, and the like). By way of non-limiting examples, the context information can comprise time data, location data, sensor data (e.g., cell tower received signal strength indicator (RSSI), WiFi RSSI, Bluetooth RSSI, luminosity, inertial measurement unit (IMU) data, magnetometer data, barometer data, grasp, and distance), user activity data describing user activity on one or more devices and in the real world, biometric data (e.g., heart rate, blood oxygenation, galvanic skin response, and gaze information) and operating system data (e.g., foreground / background applications, current CPU usage, current memory usage, and network bandwidth used). The context component 602 provides the context information to an inference component 604.

The inference component 604 uses the context information provided by the context component 602 to generate one or more user context profiles 606 for the user 600. In generating a user context profile, the inference component 604 may utilize one or more machine learning techniques to infer one or more aspects of the user context profile from context information. The inference component 604 can use either supervised or unsupervised machine learning techniques to infer aspects of context profiles. For supervised machine learning techniques, prior, labeled, knowledge of the behavior of multiple users can be used to infer typical usage profiles, such as "sleeping", "exercising", "driving", and "at work". For unsupervised machine learning techniques, the inference component 604 can learn typical context profiles for the user 600 dynamically based on sampling data from the context information for the user 600. The inference component 604 generates a set of common context profiles 606 that can be enabled by the user 600 in a configuration UI 608 to control conditions of message delivery.

The context profiles 606 generated by the inference component 604 include data that represents specific user contexts. Using machine learning techniques, the inference component 604 can determine salient features for a particular user context, and this information can be presented to the user by the configuration UI 608. For example, if a user tends to commute back from work on Thursdays at 5:30 pm, this information can be reflected in a context profile 606. Further, time and activity information (e.g., "driving") can be presented to the user such that the user 600 fully understands the aspects of the context profile 606.

The configuration UI 608 presents visual representations of user context profiles 606 and allows the user 600 to enable or disable a context profile for message delivery. The configuration UI 608 displays context profiles 606 with textual and/or visual representations of the aspects of the user context profile such that the user 600 can easily understand the context in which messages will be delivered if a particular profile is enabled. The configuration UI 608 also allows users to specify configuration settings for each context profile. Configuration settings can be used to specify user preferences such as: whether message senders are notified when a message is held for later delivery; whether messages senders are provided information about a context defined by a user context profile; whether message senders are provided information about a current context of the first user as well as the information that is provided to the message sender regarding a user context profile or a current context.

A message delivery component 610 utilizes enabled context profiles 606 to deliver messages to the device 601 of the user 600. Each context profile describes a context in which messages are not to be delivered to the device 601 of the user 600 or a context in which messages sent from the device 601 are not to be delivered to another device. The message delivery component 610 holds messages for later delivery when the context is detected. That is, the message delivery component 610 holds messages when a current context of the user 600 (determined from current context information) matches a context described by an enabled context profile and delivers the messages once the user 600 is in a context in which it is appropriate to deliver messages to the user 600 or deliver messages from the user 600.

In some embodiments, the message delivery component 610 includes message sender-side extensions that can notify senders of the recipients' availability status and allow them to view recipients' context profiles to identify a different context (e.g., time, place, or the like) to send the message to the recipient.

In an example of the forgoing interactions of the messaging system, Alice and Bob are friends and send each other messages using a messaging application (an example of the messaging client 104 illustrated by FIG. 1). Bob has yoga classes Tuesdays and Fridays from 8:30 to 9:30 am and does not like to be distracted by incoming messages during this time. After having used the messaging system for two weeks, the inference component 604 infers a context profile for this activity based on Bob's location and his body's state of light exertion measured via heart rate and motion information on his smart watch. During a moment when Bob is active on his phone (an example of the device 102), the configuration UI 608 notifies him if he wants to enable the context profile to establish a message blocking filter while he is engaged in the activity (e.g., Tuesdays and Fridays while at Yoga Studio X) since he rarely looks at messages or takes calls during that time. Bob enables the user context profile, and also adds an option to notify senders that he is busy at that time and to notify senders of other contexts that are preferred by Bob.

Now when Alice tries to send a message to Bob, she gets notified that Bob might not be available and that 10am would be a better time. Alice can send the message anyway and it will be delivered when Bob is no longer engaged in the activity, or Alice can choose from contexts in which Bob prefers to receive his messages and deliver her message then.

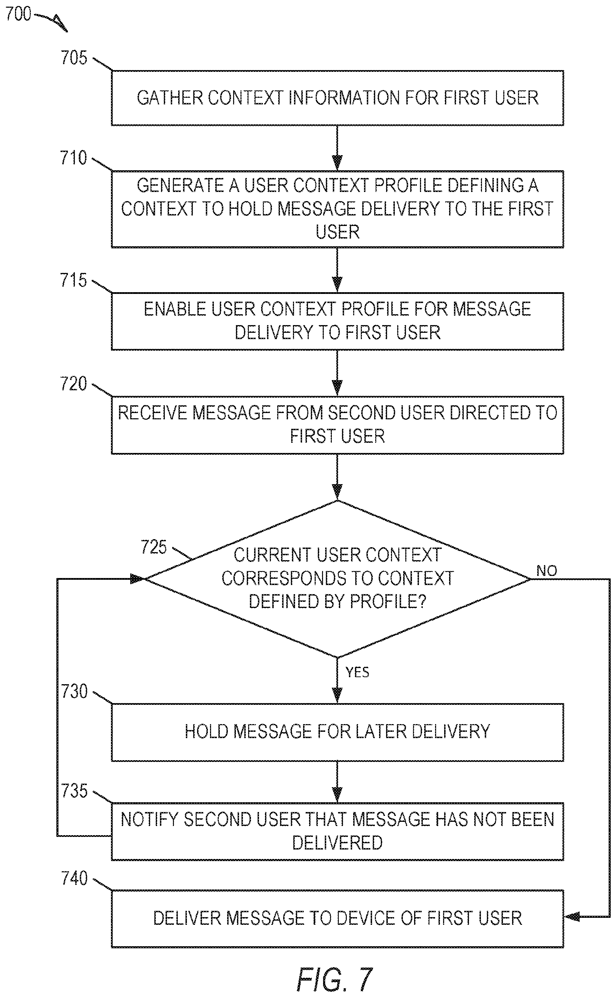

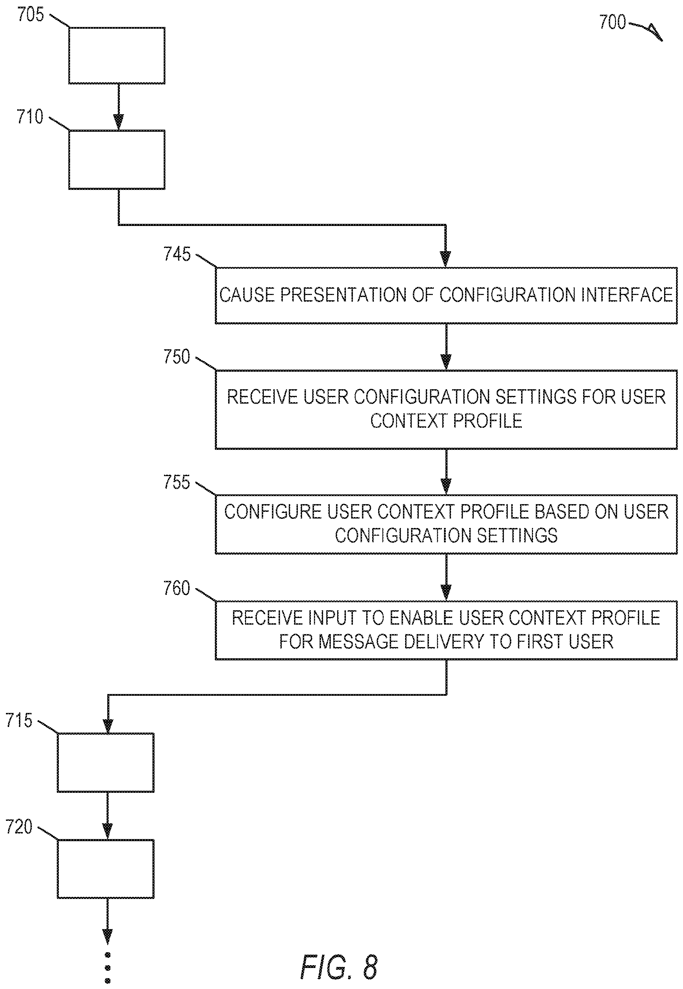

**FIGs. 7** **and** **8** are flowcharts illustrating operations of the messaging system in performing a method 700 for context-aware inbound message delivery, according to examples. The method 700 may be embodied in computer-readable instructions for execution by one or more processors such that the operations of the method 700 may be performed in part or in whole by the functional components of the messaging system 100; accordingly, the method 700 is described below by way of example with reference thereto. However, it shall be appreciated that at least some of the operations of the method 700 may be deployed on various other hardware configurations than the messaging system 100.

At operation 705, the messaging system 100 gathers context information for a first user. The messaging system 100 gathers at least a portion of the context information from at least a first device of the user (e.g., client device 102).

At operation 710, the messaging system 100 generates a user context profile based on the context information. The user context profile defines a specific context to hold message delivery to a first user. The user context profile may, for example, define a context in which it is inappropriate for the first user to receive messages. The messaging system 100 infers the context from the context information. The messaging system 100 can use either supervised or unsupervised machine learning methods to infer the context. In the case of supervised methods, prior, labeled, knowledge of the behavior of many users can be applied to infer a typical usage profile (e.g., "sleeping", "exercising", "driving", "at work", "do not disturb"). In the unsupervised case, the messaging system 100 can learn typical context profiles dynamically based on sampling the user's behavior described by the context information. In general, these machine learning techniques can be used to determine the salient features for the context (e.g., if a user tends to commute back from work on Thursdays at 5:30 pm, this is reflected in the context profile).

At operation 715, the messaging system 100 enables the context profile for delivery of messages to the first user. While the context profile is enabled, the messaging system 100 delivers messages to the user based on the context defined by the context profile. That is, if the messaging system 100 determines that a current context of the user corresponds to the context defined by the user context profile (e.g., the current time and location of the user matches a time and location specified by the context profile), the messaging system 100 holds the message for delivery until a different context is detected. In some embodiments, the messaging system 100 enables the user context profile in response to receiving input provided by the first user via a configuration user interface provided to the first device of the first user.

At operation 720, the messaging system 100 receives, from a second device of a second user, a message that is directed to the first user. Based on receiving the message, the messaging system 100 determines, at operation 725, whether a current context of the first user corresponds to the context defined by the user context profile. The messaging system 100 determines the current context of the user based on current context information from at least the first device. That is, the messaging system 100 may generate the user context profile based on first context information (historical context information) and determine the current context of the first user based on second context information (current context information).

If the messaging system 100 determines that the current context of the first user corresponds to the context defined by the user context profile, the messaging system 100 holds the message for later delivery (operation 730) and notifies the second user that the message has not yet been delivered (operation 735). That is, the messaging system 100 holds the message for later delivery to the first user based on detecting the context defined by the user context profile from the current context information associated with the first user.

In notifying the second user, the messaging system 100 can provide a notification to the second device of the second user that indicates that the message has not yet been delivered. The notification may further include a suggestion to the second user of a different context (e.g., time, location, activity) in which the message can be delivered to the first user. Depending on configuration settings established by the first user, the notification may further include information describing one or more aspects of the context defined by the user context profile, one or more aspects of the current context of the first user, one or more aspects of another context in which it would be appropriate to deliver the messages to the user, or various combination thereof. The messaging system 100 continues to obtain and monitor context information for the first user. The messaging system 100 continues to hold the message until the context defined by the user context profile is no longer detected, although the messaging system 100 may only provide a single notification to the second user.

Based on determining that the current context of the first user does not correspond to the context defined by the user context profile, the messaging system 100 delivers the message to the first device of the first user, at operation 740. That is, the messaging system 100 delivers the message to the first device of the first user based on determining a current context of the first user does not match the context defined by the user context profile. Hence, the messaging system 100 may generate the user context profile based on first context information, hold the message based on second context information, and deliver the messages based on third context information (e.g., more recent context information than the second context information). In delivering the message to the first user, the messaging system 100 can cause the first device to display the message.

In some instances, the message includes one or more AR content items (e.g., pictures, texts, logos, animations, and sound effects). In some embodiments, the first device is or includes a wearable device worn by the first user that includes optical elements that include a transparent display device. Consistent with these embodiments, the messaging system 100 causes the transparent display device to display the message while allowing the first user to continue to view the real-world environment through the device. In this manner, the virtual content of the message is presented by the transparent display device overlaid on the real-world environment. However, it shall be appreciated that such information may, in the alternative or in addition, be presented by a primary device that is coupled to a wearable device. That is, depending on the embodiment, the wearable device of the first user can be a stand-alone device that is capable of independent operation or may be a companion device that works with a primary device to offload intensive processing.

As shown in **FIG. 8****,** the method 700 can further include operations 745, 750, 755, and 760. As shown, the operations 745, 750, 755, and 760 can be performed subsequent to operation 710 where the messaging system 100 generates a user context profile for the first user. At operation 745, the messaging system 100 causes presentation of a configuration UI on the first device of the first user. The configuration UI allows the first user to view, configure, enable, and disable context profiles. The UI may include a combination of input fields, toggles, and other user interface input elements that can be used to this end.

The configuration UI includes a visual representation of the context profile and may include textual information that describes the user context profile. The configuration UI can present the visual representation of the context profile among a set of context profile representations that the first user can configure, enable, and disable. The set of context profile representations correspond to a set of context profiles generated for the first user by the messaging system 100.

At operation 750, the messaging system 100 receives one or more user configuration settings for the user context profile. The one or more configuration settings can specify user preferences such as whether message senders are notified when a message is held for later delivery; whether message senders are provided information about a context defined by a user context profile; whether message senders are provided information about a current context of the first user; and what information is provided to a message sender regarding a context profile or a current context. The one or more configuration settings can further specify a modification to one or more aspects of the user context profile.

At operation 755, the messaging system 100 configures the user context profile based on the one or more configuration settings. In some instances, configuring the user context profile includes modifying one or more aspects of the user context profile.

At operation 760, the messaging system 100 receives input provided by the first user via the configuration UI to enable the user context profile for message delivery for the first user. Consistent with these embodiments, the messaging system 100 enables the user context profile for message delivery to the first user at operation 710 based on receiving the input.

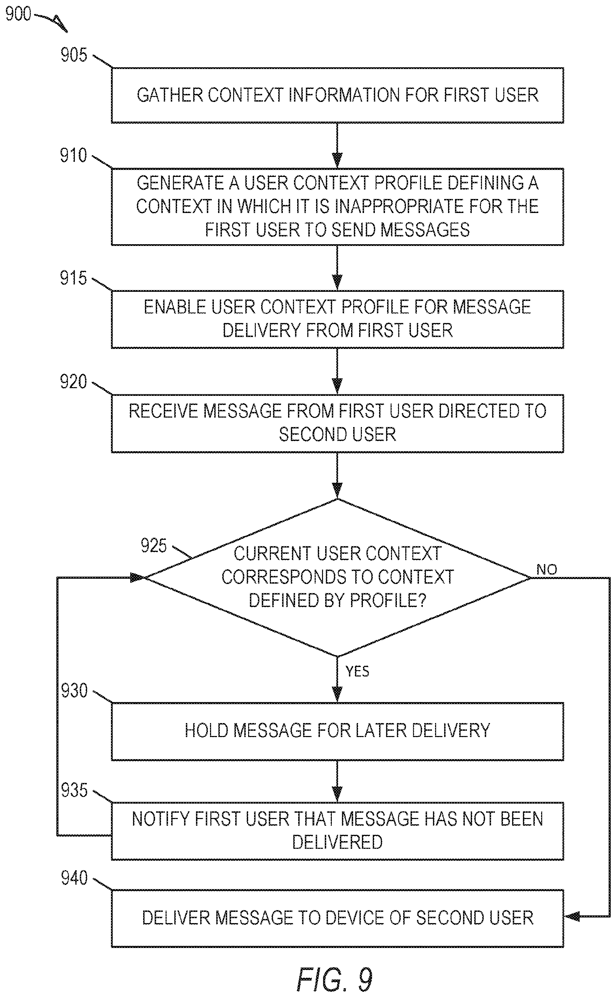

**FIG. 9** is a flowchart illustrating operations of the messaging system in performing a method 900 for context-aware outbound message delivery, according to examples. The method 900 may be embodied in computer-readable instructions for execution by one or more processors such that the operations of the method 900 may be performed in part or in whole by the functional components of the messaging system 100; accordingly, the method 900 is described below by way of example with reference thereto. However, it shall be appreciated that at least some of the operations of the method 900 may be deployed on various other hardware configurations than the messaging system 100.

At operation 905, the messaging system 100 gathers context information for a first user. The messaging system 100 gathers at least a portion of the context information from at least a first device of the user (e.g., client device 102).

At operation 910, the messaging system 100 generates a user context profile based on the context information. The user context profile defines a specific context to hold messages sent by the first user. For example, the context profile may define a context in which it is inappropriate for the first user to send messages. The messaging system 100 infers the context from the context information.

At operation 915, the messaging system 100 enables the context profile for delivery of messages by the first user. While the context profile is enabled, the messaging system 100 delivers messages from the first user based on the context defined by the context profile. That is, if the messaging system 100 determines that a current context of the first user corresponds to the context defined by the user context profile (e.g., the current time and location of the user matches a time and location specified by the context profile), the messaging system 100 holds the message for delivery until a different context is detected. In some embodiments, the messaging system 100 enables the user context profile in response to receiving input provided by the first user via a configuration user interface provided to the first device of the first user.

At operation 920, the messaging system 100 receives a message from the first user that is directed to a second user. Based on receiving the message, the messaging system 100 determines, at operation 925, whether a current context of the first user corresponds to the context defined by the user context profile. The messaging system 100 determines the current context of the user based on current context information from at least the first device. That is, the messaging system 100 may generate the user context profile based on first context information (historical context information) and determine the current context of the first user based on second context information (current context information).

If the messaging system 100 determines that the current context of the first user corresponds to the context defined by the user context profile, the messaging system 100 holds the message for later delivery (operation 930) and notifies the first user that the message has not yet been delivered (operation 935). That is, the messaging system 100 holds the message for later delivery to the second user based on detecting the context defined by the user context profile from the current context information associated with the first user.

In notifying the first user, the messaging system 100 can provide a notification to the first device of the first user that indicates that the message has not yet been delivered. The notification may further include a suggestion to the first user of a different context (e.g., time, location, activity) in which the message should be sent. The notification may further include a suggestion to reconsider sending the message, and may include one or more suggested revisions.

Based on determining that the current context of the first user does not correspond to the context defined by the user context profile, the messaging system 100 delivers the message to a second device of the second user, at operation 940. That is, the messaging system 100 delivers the message to the second device based on determining a current context of the first user does not match the context defined by the user context profile. Hence, the messaging system 100 may generate the user context profile based on first context information, hold the message based on second context information, and deliver the message based on third context information (e.g., more recent context information than the second context information). In delivering the message to the second user, the messaging system 100 can cause the second device to display the message.

Although the described flowcharts can show operations as a sequential process, many of the operations can be performed in parallel or concurrently. In addition, the order of the operations may be re-arranged. A process is terminated when its operations are completed. A process may correspond to a method, a procedure, an algorithm, etc. The operations of methods may be performed in whole or in part, may be performed in conjunction with some or all of the operations in other methods, and may be performed by any number of different systems, such as the systems described herein, or any portion thereof, such as a processor included in any of the systems.

### SOFTWARE ARCHITECTURE

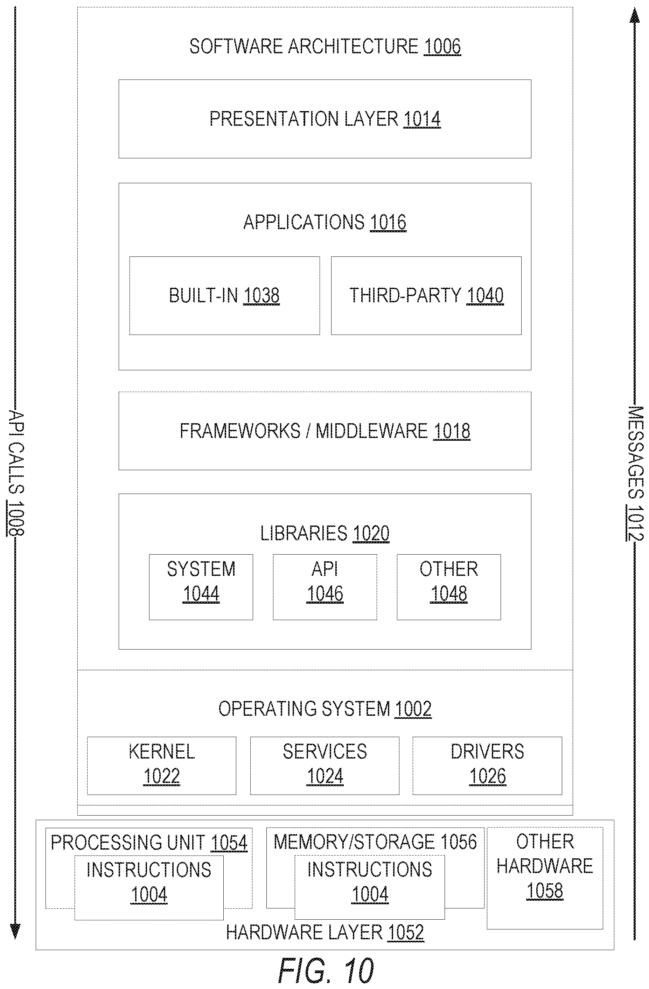

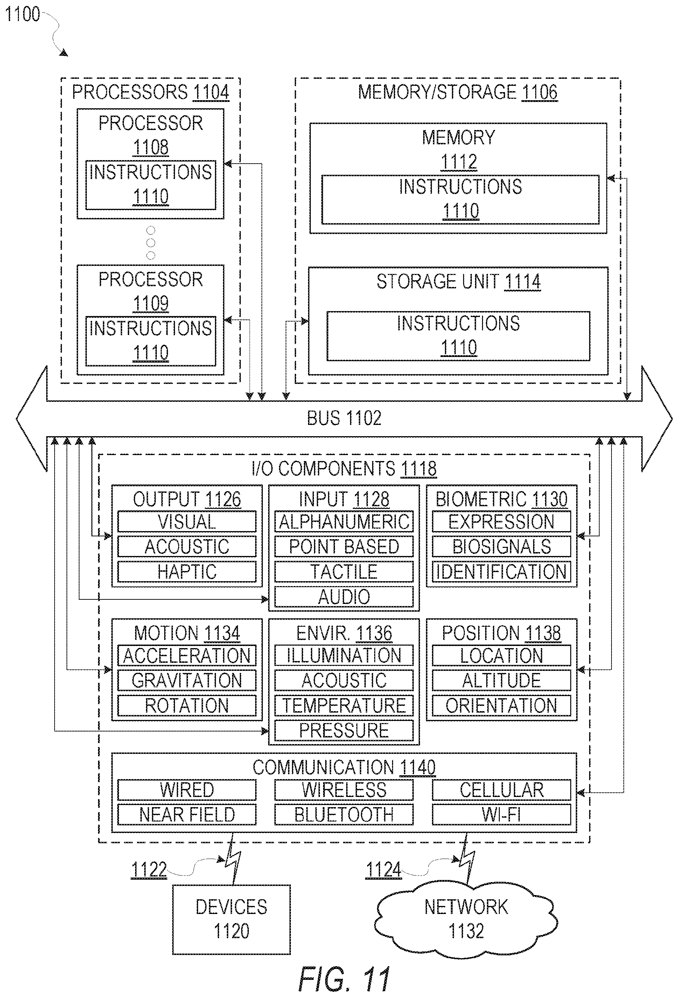

**FIG. 10** is a block diagram illustrating an example software architecture 1006, which may be used in conjunction with various hardware architectures herein described. **FIG. 10** is a non-limiting example of a software architecture, and it will be appreciated that many other architectures may be implemented to facilitate the functionality described herein. The software architecture 1006 may execute on hardware such as a machine 1100 of **FIG. 11** that includes, among other things, processors 1104, memory/storage 1106, and I/O components 1118. A representative hardware layer 1052 is illustrated and can represent, for example, the machine 1100 of **FIG. 11****.** The representative hardware layer 1052 includes a processing unit 1054 having associated executable instructions 1004. The executable instructions 1004 represent the executable instructions of the software architecture 1006, including implementation of the methods, components, and so forth described herein. The hardware layer 1052 also includes memory and/or storage modules 1056, which also have the executable instructions 1004. The hardware layer 1052 may also comprise other hardware 1058.

In the example architecture of **FIG. 10****,** the software architecture 1006 may be conceptualized as a stack of layers where each layer provides particular functionality. For example, the software architecture 1006 may include layers such as an operating system 1002, libraries 1020, frameworks/middleware 1018, applications 1016, and a presentation layer 1014. Operationally, the applications 1016 and/or other components within the layers may invoke API calls 1008 through the software stack and receive a response to the API calls 1008 as messages 1012. The layers illustrated are representative in nature and not all software architectures have all layers. For example, some mobile or special-purpose operating systems may not provide a frameworks/middleware 1018, while others may provide such a layer. Other software architectures may include additional or different layers.

The operating system 1002 may manage hardware resources and provide common services. The operating system 1002 may include, for example, a kernel 1022, services 1024, and drivers 1026. The kernel 1022 may act as an abstraction layer between the hardware and the other software layers. For example, the kernel 1022 may be responsible for memory management, processor management (e.g., scheduling), component management, networking, security settings, and so on. The services 1024 may provide other common services for the other software layers. The drivers 1026 are responsible for controlling or interfacing with the underlying hardware. For instance, the drivers 1026 include display drivers, camera drivers, Bluetooth^{®} drivers, flash memory drivers, serial communication drivers (e.g., Universal Serial Bus (USB) drivers), Wi-Fi^{®} drivers, audio drivers, power management drivers, and so forth depending on the hardware configuration.

The libraries 1020 provide a common infrastructure that is used by the applications 1016 and/or other components and/or layers. The libraries 1020 provide functionality that allows other software components to perform tasks in an easier fashion than by interfacing directly with the underlying operating system 1002 functionality (e.g., kernel 1022, services 1024, and/or drivers 1026). The libraries 1020 may include system libraries 1044 (e.g., C standard library) that may provide functions such as memory allocation functions, string manipulation functions, mathematical functions, and the like. In addition, the libraries 1020 may include API libraries 1046 such as media libraries (e.g., libraries to support presentation and manipulation of various media formats such as MPEG4, H.2104, MP3, AAC, AMR, JPG, and PNG), graphics libraries (e.g., an OpenGL framework that may be used to render 2D and 3D graphic content on a display), database libraries (e.g., SQLite that may provide various relational database functions), web libraries (e.g., WebKit that may provide web browsing functionality), and the like. The libraries 1020 may also include a wide variety of other libraries 1048 to provide many other APIs to the applications 1016 and other software components/modules.

The frameworks/middleware 1018 provide a higher-level common infrastructure that may be used by the applications 1016 and/or other software components/modules. For example, the frameworks/middleware 1018 may provide various GUI functions, high-level resource management, high-level location services, and so forth. The frameworks/middleware 1018 may provide a broad spectrum of other APIs that may be utilized by the applications 1016 and/or other software components/modules, some of which may be specific to a particular operating system 1002 or platform.

The applications 1016 include built-in applications 1038 and/or third-party applications 1040. Examples of representative built-in applications 1038 may include, but are not limited to, a contacts application, a browser application, a book reader application, a location application, a media application, a messaging application, and/or a game application. The third-party applications 1040 may include an application developed using the ANDROID^{™} or IOS^{™} software development kit (SDK) by an entity other than the vendor of the particular platform and may be mobile software running on a mobile operating system such as IOS^{™}, ANDROID^{™}, WINDOWS^{®} Phone, or other mobile operating systems. The third-party applications 1040 may invoke the API calls 1008 provided by the mobile operating system (such as the operating system 1002) to facilitate functionality described herein.

The applications 1016 may use built-in operating system functions (e.g., kernel 1022, services 1024, and/or drivers 1026), libraries 1020, and frameworks/middleware 1018 to create user interfaces to interact with users of the system. Alternatively, or additionally, in some systems interactions with a user may occur through a presentation layer, such as the presentation layer 1014. In these systems, the application/component "logic" can be separated from the aspects of the application/component that interact with a user.

**FIG. 11** is a block diagram illustrating components of a machine 1100, according to some examples, able to read instructions from a machine-readable medium (e.g., a machine-readable storage medium) and perform any one or more of the methodologies discussed herein. Specifically, **FIG. 11** shows a diagrammatic representation of the machine 1100 in the example form of a computer system, within which instructions 1110 (e.g., software, a program, an application, an applet, an app, or other executable code) for causing the machine 1100 to perform any one or more of the methodologies discussed herein may be executed. As such, the instructions 1110 may be used to implement modules or components described herein. The instructions 1110 transform the general, non-programmed machine 1100 into a particular machine 1100 programmed to carry out the described and illustrated functions in the manner described. In alternative embodiments, the machine 1100 operates as a standalone device or may be coupled (e.g., networked) to other machines. In a networked deployment, the machine 1100 may operate in the capacity of a server machine or a client machine in a server-client network environment, or as a peer machine in a peer-to-peer (or distributed) network environment. The machine 1100 may comprise, but not be limited to, a server computer, a client computer, a PC, a tablet computer, a laptop computer, a netbook, a set-top box (STB), a PDA, an entertainment media system, a cellular telephone, a smart phone, a mobile device, a wearable device (e.g., a smart watch), a smart home device (e.g., a smart appliance), other smart devices, a web appliance, a network router, a network switch, a network bridge, or any machine capable of executing the instructions 1110, sequentially or otherwise, that specify actions to be taken by the machine 1100. Further, while only a single machine 1100 is illustrated, the term "machine" shall also be taken to include a collection of machines that individually or jointly execute the instructions 1110 to perform any one or more of the methodologies discussed herein.

The machine 1100 may include processors 1104, memory/storage 1106, and I/O components 1118, which may be configured to communicate with each other such as via a bus 1102. In an example, the processors 1104 (e.g., a CPU, a reduced instruction set computing (RISC) processor, a complex instruction set computing (CISC) processor, a (GPU, a digital signal processor (DSP), an ASIC, a radio-frequency integrated circuit (RFIC), another processor, or any suitable combination thereof) may include, for example, a processor 1108 and a processor 1109 that may execute the instructions 1110. Although FIG. 11 shows multiple processors 1104, the machine 1100 may include a single processor with a single core, a single processor with multiple cores (e.g., a multi-core processor), multiple processors with a single core, multiple processors with multiple cores, or any combination thereof.

The memory/storage 1106 may include a memory 1112, such as a main memory, or other memory storage, and a storage unit 1114, both accessible to the processors 1104 such as via the bus 1102. The storage unit 1114 and memory 1112 store the instructions 1110 embodying any one or more of the methodologies or functions described herein. The instructions 1110 may also reside, completely or partially, within the memory 1112, within the storage unit 1114, within at least one of the processors 1104 (e.g., within the processor's cache memory), or any suitable combination thereof, during execution thereof by the machine 1100. Accordingly, the memory 1112, the storage unit 1114, and the memory of the processors 1104 are examples of machine-readable media.

The I/O components 1118 may include a wide variety of components to receive input, provide output, produce output, transmit information, exchange information, capture measurements, and so on. The specific I/O components 1118 that are included in a particular machine 1100 will depend on the type of machine. For example, portable machines such as mobile phones will likely include a touch input device or other such input mechanisms, while a headless server machine will likely not include such a touch input device. It will be appreciated that the I/O components 1118 may include many other components that are not shown in FIG. 11. The I/O components 1118 are grouped according to functionality merely for simplifying the following discussion, and the grouping is in no way limiting. In various examples, the I/O components 1118 may include output components 1126 and input components 1128. The output components 1126 may include visual components (e.g., a display such as a plasma display panel (PDP), a light-emitting diode (LED) display, a liquid crystal display (LCD), a projector, or a cathode ray tube (CRT)), acoustic components (e.g., speakers), haptic components (e.g., a vibratory motor, resistance mechanisms), other signal generators, and so forth. The input components 1128 may include alphanumeric input components (e.g., a keyboard, a touch screen display configured to receive alphanumeric input, a photo-optical keyboard, or other alphanumeric input components), point-based input components (e.g., a mouse, a touchpad, a trackball, a joystick, a motion sensor, or other pointing instruments), tactile input components (e.g., a physical button, a touch screen display that provides location and/or force of touches or touch gestures, or other tactile input components), audio input components (e.g., a microphone), and the like.

In further examples, the I/O components 1118 may include biometric components 1130, motion components 1134, environment components 1136, or position components 1138, among a wide array of other components. For example, the biometric components 1130 may include components to detect expressions (e.g., hand expressions, facial expressions, vocal expressions, body gestures, or eye tracking), measure biosignals (e.g., blood pressure, heart rate, body temperature, perspiration, or brain waves), identify a person (e.g., voice identification, retinal identification, facial identification, fingerprint identification, or electroencephalogram-based identification), and the like. The motion components 1134 may include acceleration sensor components (e.g., accelerometer), gravitation sensor components, rotation sensor components (e.g., gyroscope), and so forth. The environment components 1136 may include, for example, illumination sensor components (e.g., photometer), temperature sensor components (e.g., one or more thermometers that detect ambient temperature), humidity sensor components, pressure sensor components (e.g., barometer), acoustic sensor components (e.g., one or more microphones that detect background noise), proximity sensor components (e.g., infrared sensors that detect nearby objects), gas sensors (e.g., gas sensors to detect concentrations of hazardous gases for safety or to measure pollutants in the atmosphere), or other components that may provide indications, measurements, or signals corresponding to a surrounding physical environment. The position components 1138 may include location sensor components (e.g., a Global Positioning System (GPS) receiver component), altitude sensor components (e.g., altimeters or barometers that detect air pressure from which altitude may be derived), orientation sensor components (e.g., magnetometers), and the like.

Communication may be implemented using a wide variety of technologies. The I/O components 1118 may include communication components 1140 operable to couple the machine 1100 to a network 1132 or devices 1120 via a coupling 1124 and a coupling 1122, respectively. For example, the communication components 1140 may include a network interface component or other suitable device to interface with the network 1132. In further examples, the communication components 1140 may include wired communication components, wireless communication components, cellular communication components, Near Field Communication (NFC) components, Bluetooth^{®} components (e.g., Bluetooth^{®} Low Energy), Wi-Fi^{®} components, and other communication components to provide communication via other modalities. The devices 1120 may be another machine or any of a wide variety of peripheral devices (e.g., a peripheral device coupled via a USB).

Moreover, the communication components 1140 may detect identifiers or include components operable to detect identifiers. For example, the communication components 1140 may include Radio Frequency Identification (RFID) tag reader components, NFC smart tag detection components, optical reader components (e.g., an optical sensor to detect one-dimensional bar codes such as Universal Product Code (UPC) bar code, multi-dimensional bar codes such as Quick Response (QR) code, Aztec code, Data Matrix, Dataglyph, MaxiCode, PDF494, Ultra Code, UCC RSS-2D bar code, and other optical codes), or acoustic detection components (e.g., microphones to identify tagged audio signals). In addition, a variety of information may be derived via the communication components 1140, such as location via Internet Protocol (IP) geolocation, location via Wi-Fi^{®} signal triangulation, location via detecting an NFC beacon signal that may indicate a particular location, and so forth.

### Glossary

"CARRIER SIGNAL" in this context refers to any intangible medium that is capable of storing, encoding, or carrying instructions for execution by a machine, and includes digital or analog communications signals or other intangible media to facilitate communication of such instructions. Instructions may be transmitted or received over a network using a transmission medium via a network interface device and using any one of a number of well-known transfer protocols.

"CLIENT DEVICE" in this context refers to any machine that interfaces to a communications network to obtain resources from one or more server systems or other client devices. A client device may be, but is not limited to, a mobile phone, desktop computer, laptop, PDA, smart phone, tablet, ultra book, netbook, laptop, multi-processor system, microprocessor-based or programmable consumer electronics system, game console, set-top box, or any other communication device that a user may use to access a network.

"COMMUNICATIONS NETWORK" in this context refers to one or more portions of a network that may be an ad hoc network, an intranet, an extranet, a virtual private network (VPN), a local area network (LAN), a wireless LAN (WLAN), a wide area network (WAN), a wireless WAN (WWAN), a metropolitan area network (MAN), the Internet, a portion of the Internet, a portion of the Public Switched Telephone Network (PSTN), a plain old telephone service (POTS) network, a cellular telephone network, a wireless network, a Wi-Fi^{®} network, another type of network, or a combination of two or more such networks. For example, a network or a portion of a network may include a wireless or cellular network, and the coupling to the network may be a Code Division Multiple Access (CDMA) connection, a Global System for Mobile communications (GSM) connection, or another type of cellular or wireless coupling. In this example, the coupling may implement any of a variety of types of data transfer technology, such as Single Carrier Radio Transmission Technology (1xRTT), Evolution-Data Optimized (EVDO) technology, General Packet Radio Service (GPRS) technology, Enhanced Data rates for GSM Evolution (EDGE) technology, third Generation Partnership Project (3GPP) including 3G, fourth generation wireless (4G) networks, Universal Mobile Telecommunications System (UMTS), High-Speed Packet Access (HSPA), Worldwide Interoperability for Microwave Access (WiMAX), Long-Term Evolution (LTE) standard, others defined by various standard-setting organizations, other long-range protocols, or other data transfer technology.

"MACHINE-READABLE MEDIUM" in this context refers to a component, device, or other tangible medium able to store instructions and data temporarily or permanently, and may include, but is not limited to, random-access memory (RAM), read-only memory (ROM), buffer memory, flash memory, optical media, magnetic media, cache memory, other types of storage (e.g., Erasable Programmable Read-Only Memory (EPROM)), and/or any suitable combination thereof. The term "machine-readable medium" should be taken to include a single medium or multiple media (e.g., a centralized or distributed database, or associated caches and servers) able to store instructions. The term "machine-readable medium" shall also be taken to include any medium, or combination of multiple media, that is capable of storing instructions (e.g., code) for execution by a machine, such that the instructions, when executed by one or more processors of the machine, cause the machine to perform any one or more of the methodologies described herein. Accordingly, a "machine-readable medium" refers to a single storage apparatus or device, as well as "cloud-based" storage systems or storage networks that include multiple storage apparatus or devices. The term "machine-readable medium" excludes signals per se.

"COMPONENT" in this context refers to a device, a physical entity, or logic having boundaries defined by function or subroutine calls, branch points, APIs, or other technologies that provide for the partitioning or modularization of particular processing or control functions. Components may be combined via their interfaces with other components to carry out a machine process. A component may be a packaged functional hardware unit designed for use with other components and a part of a program that usually performs a particular function of related functions. Components may constitute either software components (e.g., code embodied on a machine-readable medium) or hardware components.

A "HARDWARE COMPONENT" is a tangible unit capable of performing certain operations and may be configured or arranged in a certain physical manner. In various examples, one or more computer systems (e.g., a standalone computer system, a client computer system, or a server computer system) or one or more hardware components of a computer system (e.g., a processor or a group of processors) may be configured by software (e.g., an application or application portion) as a hardware component that operates to perform certain operations as described herein. A hardware component may also be implemented mechanically, electronically, or any suitable combination thereof. For example, a hardware component may include dedicated circuitry or logic that is permanently configured to perform certain operations. A hardware component may be a special-purpose processor, such as a field-programmable gate array (FPGA) or an ASIC. A hardware component may also include programmable logic or circuitry that is temporarily configured by software to perform certain operations. For example, a hardware component may include software executed by a general-purpose processor or other programmable processor.

Once configured by such software, hardware components become specific machines (or specific components of a machine) uniquely tailored to perform the configured functions and are no longer general-purpose processors. It will be appreciated that the decision to implement a hardware component mechanically, in dedicated and permanently configured circuitry, or in temporarily configured circuitry (e.g., configured by software) may be driven by cost and time considerations. Accordingly, the phrase "hardware component" (or "hardware-implemented component") should be understood to encompass a tangible entity, be that an entity that is physically constructed, permanently configured (e.g., hardwired), or temporarily configured (e.g., programmed) to operate in a certain manner or to perform certain operations described herein.

Considering embodiments in which hardware components are temporarily configured (e.g., programmed), each of the hardware components need not be configured or instantiated at any one instance in time. For example, where a hardware component comprises a general-purpose processor configured by software to become a special-purpose processor, the general-purpose processor may be configured as respectively different special-purpose processors (e.g., comprising different hardware components) at different times. Software accordingly configures a particular processor or processors, for example, to constitute a particular hardware component at one instance of time and to constitute a different hardware component at a different instance of time.

Hardware components can provide information to, and receive information from, other hardware components. Accordingly, the described hardware components may be regarded as being communicatively coupled. Where multiple hardware components exist contemporaneously, communications may be achieved through signal transmission (e.g., over appropriate circuits and buses) between or among two or more of the hardware components. In embodiments in which multiple hardware components are configured or instantiated at different times, communications between such hardware components may be achieved, for example, through the storage and retrieval of information in memory structures to which the multiple hardware components have access. For example, one hardware component may perform an operation and store the output of that operation in a memory device to which it is communicatively coupled. A further hardware component may then, at a later time, access the memory device to retrieve and process the stored output. Hardware components may also initiate communications with input or output devices, and can operate on a resource (e.g., a collection of information).

The various operations of example methods described herein may be performed, at least partially, by one or more processors that are temporarily configured (e.g., by software) or permanently configured to perform the relevant operations. Whether temporarily or permanently configured, such processors may constitute processor-implemented components that operate to perform one or more operations or functions described herein. As used herein, "processor-implemented component" refers to a hardware component implemented using one or more processors. Similarly, the methods described herein may be at least partially processor-implemented, with a particular processor or processors being an example of hardware. For example, at least some of the operations of a method may be performed by one or more processors or processor-implemented components.

Moreover, the one or more processors may also operate to support performance of the relevant operations in a "cloud computing" environment or as a "software as a service" (SaaS). For example, at least some of the operations may be performed by a group of computers (as examples of machines including processors), with these operations being accessible via a network (e.g., the Internet) and via one or more appropriate interfaces (e.g., an application programming interface (API)). The performance of certain of the operations may be distributed among the processors, not only residing within a single machine, but deployed across a number of machines. In some examples, the processors or processor-implemented components may be located in a single geographic location (e.g., within a home environment, an office environment, or a server farm). In other examples, the processors or processor-implemented components may be distributed across a number of geographic locations.

"PROCESSOR" in this context refers to any circuit or virtual circuit (a physical circuit emulated by logic executing on an actual processor) that manipulates data values according to control signals (e.g., "commands," "op codes," "machine code," etc.) and which produces corresponding output signals that are applied to operate a machine. A processor may, for example, be a CPU, a RISC processor, a CISC processor, a GPU, a DSP, an ASIC, a RFIC, or any combination thereof. A processor may further be a multi-core processor having two or more independent processors (sometimes referred to as "cores") that may execute instructions contemporaneously.

"TIMESTAMP" in this context refers to a sequence of characters or encoded information identifying when a certain event occurred (for example, giving date and time of day), sometimes accurate to a small fraction of a second.

## Claims

1. A method comprising:
generating (710) a user context profile defining:
a first context to hold message delivery to a first user based on first context information gathered from at least one device of the first user; and
a second context to hold delivery of messages sent by the first user based on second context information gathered from the at least one device of the first user;
enabling (715) the user context profile for message delivery to the first user;
receiving (720) a message from a second user directed to the first user;
detecting (725, YES), based on third context information from the at least one device, that a context of the first user is the first context defined by the user context profile;
in response to detecting (725, YES) the context of the user is the first context, holding (730) the message for later delivery to the first user and providing (735) a first notification to the second user indicating that the message has not been delivered based on the user context profile;
determining (725, NO), based on fourth context information from the at least one device and using at least one processor, that a current context of the first user does not correspond to the context defined by the user context profile; and
delivering (740) the message to the at least one device of the first user based on determining the current context does not correspond to the context defined by the user context profile;
the method further comprising:
receiving (920) a second message from the first user directed to the second user;
detecting (925, YES), based on fifth context information from the at least one device, that a context of the first user is the second context defined by the user context profile;
in response to detecting (925, YES) the context of the first user corresponds to the second context defined by the user context profile, holding (930) the second message for later delivery to the second user and providing (935) a second notification to the first user indicating that the second message has not been delivered based on the user context profile.

2. The method of claim 1, wherein:
the first notification indicates one or more further contexts preferred by the first user; and
the method comprises:
receiving, from the second user, an indication of a delivery context from the one or more further contexts;
determining (725, NO), based on the fourth context information, that the current context of the first user does not correspond to the context defined by the user context profile; and
delivering (740) the message to the at least one device of the first user based on determining that the current context does not correspond to the context defined by the user context profile.

3. The method of claim 1, wherein the first notification includes information describing one or more aspects of the first context defined by the user context profile.

4. The method of claim 1, wherein the first notification includes a suggested context for sending the first message to the first user.

5. The method of claim 1, further comprising:
causing (745) presentation, by the at least one device, of a configuration interface that includes a description of the user context profile; and
receiving (760) input to enable the user context profile for message delivery to the first user, the enabling of the user context profile for message delivery being in response to the input.

6. The method of claim 5, wherein the configuration interface further includes a set of user context profiles for enablement for message delivery to the first user.

7. The method of claim 5, further comprising:
receiving (750) one or more user configuration settings for the user context profile specified by the first user using the configuration interface; and
configuring (755) the user context profile according to the one or more user configuration settings.

8. The method of claim 7, wherein the one or more user configuration settings specify one or more of: whether message senders are notified when a message is held for later delivery; whether messages senders are provided information about the context defined by a user context profile; whether messages senders are provided information about the current context of the first user; and the information that is provided to message senders regarding the user context profile or the current context of the first user.

9. The method of claim 7, wherein:
the one or more user configuration settings include a modification to one or more aspects of the user context profile; and
the configuring of the user context profile comprises modifying the user context profile.

10. The method of claim 1, wherein the generating of the user context profile comprises inferring one or more aspects of the user context profile using machine learning.

11. The method of claim 1, further comprising obtaining context information of the first user from the at least one device of the first user.

12. A system comprising:
one or more hardware processors (1104); and
at least one memory (1106) storing instructions that cause the one or more hardware processors (1104) to perform the method of claim 1.

13. The system of claim 12, wherein:
the first notification indicates one or more further contexts preferred by the first user; and
the operations comprise:
receiving, from the second user, an indication of a delivery context from the one or more further contexts;
determining (725, NO), based on the fourth context information, that the current context of the first user does not correspond to the context defined by the user context profile; and
delivering (740) the message to the at least one device of the first user based on determining that the current context does not correspond to the context defined by the user context profile.

14. The system of claim 12, wherein the notification includes information describing one or more aspects of the context defined by the user context profile.

15. A machine-readable medium storing instructions that, when executed by a computer system, cause the computer system to perform the method of claim 1.

## Patentansprüche

1. Verfahren, das Folgendes umfasst:
Erzeugen (710) eines Benutzerkontextprofils, das Folgendes definiert:
einen ersten Kontext zum Zurückhalten von Nachrichtenzustellung an einen ersten Benutzer basierend auf ersten Kontextinformationen, die von mindestens einer Vorrichtung des ersten Benutzers gesammelt werden; und
einen zweiten Kontext zum Zurückhalten von Nachrichten durch den ersten Benutzer basierend auf zweiten Kontextinformationen, die von der mindestens einen Vorrichtung des erstens Benutzers gesammelt werden;
Aktivieren (715) des Benutzerkontextprofils zur Nachrichtenzustellung an den ersten Benutzer;
Empfangen (720) eine Nachricht von einem zweiten Benutzer, die an den ersten Benutzer gerichtet ist;
Erfassen (725, JA) basierend auf dritten Kontextinformationen von der mindestens einen Vorrichtung, dass ein Kontext des ersten Benutzers der erste Kontext ist, der durch das erste Benutzerkontextprofil definiert ist;
als Reaktion auf das Erfassen (725, JA), dass der Kontext des Benutzers der erste Kontext ist, Zurückhalten (730) der Nachricht für spätere Zustellung an den ersten Benutzer und Bereitstellen (735) einer ersten Bekanntgabe an den zweiten Benutzer, die angibt, dass die Nachricht basierend auf dem Benutzerkontextprofil nicht zugestellt wurde;
Bestimmen (725, NEIN) basierend auf vierten Kontextinformationen von der mindestens einen Vorrichtung und unter Verwendung mindestens eines Prozessors, dass ein aktueller Kontext des ersten Benutzers dem Kontext, der durch das Benutzerkontextprofil definiert ist, nicht entspricht;
Zustellen (740) der Nachricht an die mindestens eine Vorrichtung des ersten Benutzers basierend auf dem Bestimmen, dass der aktuelle Kontext nicht dem Kontext entspricht, der durch das erste Benutzerkontextprofils definiert ist;
wobei das Verfahren ferner umfasst:
Empfangen (920) einer zweiten Nachricht von dem ersten Benutzer, die an den zweiten Benutzer gerichtet ist;
Erfassen (925, JA) basierend auf fünften Kontextinformationen von der mindestens einen Vorrichtung, dass ein Kontext des ersten Benutzers der zweite Kontext ist, der durch das erste Benutzerkontextprofil definiert ist;
als Reaktion auf das Erfassen (925, JA), dass der Kontext des ersten Benutzers dem zweiten Kontext entspricht, der durch das Benutzerkontextprofil definiert ist, Zurückhalten (930) der zweiten Nachricht zur späteren Zustellung an den zweiten Benutzer und Bereitstellen (935) einer zweiten Bekanntgabe an den ersten Benutzer, die angibt, dass die zweite Nachricht basierend auf dem Benutzerkontextprofil nicht zugestellt wurde.

2. Verfahren nach Anspruch 1, wobei:
die erste Bekanntgabe einen oder mehrere weitere Kontexte, die der erste Benutzer bevorzugt, angibt; und
das Verfahren Folgendes umfasst:
Empfangen von dem zweiten Benutzer einer Angabe eines Zustellungskontextes von dem einen oder den mehreren weiteren Kontexten;
Bestimmen (725, NEIN) basierend auf den vierten Kontextinformationen, dass der aktuelle Kontext des ersten Benutzers dem Kontext, der durch das Benutzerkontextprofil definiert ist, nicht entspricht; und
Zustellen (740) der Nachricht an die mindestens eine Vorrichtung des ersten Benutzers basierend auf dem Bestimmen, dass der aktuelle Kontext nicht dem Kontext entspricht, der durch das erste Benutzerkontextprofils definiert ist.

3. Verfahren nach Anspruch 1, wobei die erste Bekanntgabe Informationen beinhaltet, die einen oder mehrere Aspekte des ersten Kontextes, der durch das Benutzerkontextprofil definiert ist, beinhaltet.

4. Verfahren nach Anspruch 1, wobei die erste Bekanntgabe einen suggerierten Kontext zum Senden der ersten Nachricht an den ersten Benutzer beinhaltet.

5. Verfahren nach Anspruch 1, das ferner Folgendes umfasst:
Veranlassen (745) der Präsentation durch die mindestens eine Vorrichtung einer Konfigurationsschnittstelle, die eine Beschreibung des Benutzerkontextprofils beinhaltet; und
Empfangen (760) von Eingabe zum Aktivieren des Benutzerkontextprofils zur Nachrichtenzustellung an den ersten Benutzer, wobei das Aktivieren des Benutzerkontextprofils zur Nachrichtenzustellung als Reaktion auf den Eingang erfolgt.

6. Verfahren nach Anspruch 5, wobei die Konfigurationsschnittstelle ferner einen Satz von Benutzerkontextprofilen zur Aktivierung für Nachrichtenzustellung an den ersten Benutzer beinhaltet.

7. Verfahren nach Anspruch 5, das ferner Folgendes umfasst:
Empfangen (750) einer oder mehrerer Benutzerkonfigurationseinstellungen für das Benutzerkontextprofil, das durch den ersten Benutzer spezifiziert ist, unter Verwendung der Konfigurationsschnittstelle; und
Konfigurieren (755) des Benutzerkontextprofils gemäß der einen oder den mehreren Benutzerkonfigurationseinstellungen.

8. Verfahren nach Anspruch 7, wobei die eine oder mehreren Benutzerkonfigurationseinstellungen eines oder mehr spezifizieren von: ob die Nachrichtenabsender informiert werden, wenn eine Nachricht zur späteren Zustellung zurückgehalten wird; ob Nachrichtenabsendern Informationen über den Kontext bereitgestellt werden, der durch ein Benutzerkontextprofil definiert ist; ob Nachrichtenabsendern Informationen über den aktuellen Kontext des ersten Benutzers bereitgestellt werden; und die Informationen, die an Nachrichtenabsender bezüglich des Benutzerkontextprofils oder des aktuellen Kontextes ersten Benutzers bereitgestellt werden.

9. Verfahren nach Anspruch 7, wobei:
die eine oder die mehreren Benutzerkonfigurationseinstellungen eine Modifikation an einem oder mehreren Aspekten des Benutzerkontextprofils beinhalten; und
das Konfigurieren des Benutzerkontextprofils das Modifizieren des Benutzerkontextprofils umfasst.

10. Verfahren nach Anspruch 1, wobei das Erzeugen des Benutzerkontextprofils das Inferieren eines oder mehrerer Aspekte des Benutzerkontextprofils unter Verwendung von maschinellem Lernen umfasst.

11. Verfahren nach Anspruch 1, das ferner das Erhalten von Kontextinformationen des ersten Benutzers von der mindestens einen Vorrichtung des ersten Benutzers umfasst.

12. System, das Folgendes umfasst:
einen oder mehrere Hardware-Prozessoren (1104); und
mindestens einen Speicher (1106), der Anweisungen speichert, die den einen oder die mehreren Hardware-Prozessoren (1104) veranlassen, das Verfahren nach Anspruch 1 durchzuführen.

13. System nach Anspruch 12, wobei:
die erste Bekanntgabe einen oder mehrere weitere Kontexte, die der erste Benutzer bevorzugt, angibt; und
die Operationen Folgendes umfassen:
Empfangen von dem zweiten Benutzer einer Angabe eines Zustellungskontextes von dem einen oder den mehreren weiteren Kontexten;
Bestimmen (725, NEIN) basierend auf den vierten Kontextinformationen, dass der aktuelle Kontext des ersten Benutzers dem Kontext, der durch das Benutzerkontextprofil definiert ist, nicht entspricht; und
Zustellen (740) der Nachricht an die mindestens eine Vorrichtung des ersten Benutzers basierend auf dem Bestimmen, dass der aktuelle Kontext nicht dem Kontext entspricht, der durch das erste Benutzerkontextprofils definiert ist.

14. System nach Anspruch 12, wobei die erste Bekanntgabe Informationen beinhaltet, die einen oder mehrere Aspekte des ersten Kontextes, der durch das Benutzerkontextprofil definiert ist, beschreiben.

15. Maschinenlesbares Medium, das Anweisungen speichert, die, wenn sie von einem Computersystem ausgeführt werden, das Computersystem veranlassen, das Verfahren nach Anspruch 1 durchzuführen.

## Revendications

1. Procédé consistant à :
générer (710) un profil de contexte d'utilisateur définissant :
un premier contexte pour suspendre la distribution de messages à un premier utilisateur sur la base de premières informations de contexte recueillies auprès d'au moins un dispositif du premier utilisateur ; et
un second contexte pour suspendre la distribution de messages envoyés par le premier utilisateur sur la base de deuxièmes informations de contexte recueillies auprès de l'au moins un dispositif du premier utilisateur ;
activer (715) le profil de contexte d'utilisateur pour la distribution de messages au premier utilisateur ;
recevoir (720), en provenance d'un second utilisateur, un message adressé au premier utilisateur ;
détecter (725, OUI), sur la base de troisièmes informations de contexte en provenance de l'au moins un dispositif, qu'un contexte du premier utilisateur est le premier contexte défini par le profil de contexte d'utilisateur ;
en réponse à la détection (725, OUI) du fait que le contexte de l'utilisateur est le premier contexte, suspendre (730) le message en vue de sa distribution ultérieure au premier utilisateur et fournir (735) au second utilisateur une première notification indiquant que le message n'a pas été distribué, sur la base du profil de contexte d'utilisateur ;
déterminer (725, NON), sur la base de quatrièmes informations de contexte en provenance de l'au moins un dispositif et au moyen d'au moins un processeur, qu'un contexte actuel du premier utilisateur ne correspond pas au contexte défini par le profil de contexte d'utilisateur ; et
distribuer (740) le message à l'au moins un dispositif du premier utilisateur sur la base de la détermination du fait que le contexte actuel ne correspond pas au contexte défini par le profil de contexte d'utilisateur ;
le procédé consistant en outre à :
recevoir (920), en provenance du premier utilisateur, un second message adressé au second utilisateur ;
détecter (925, OUI), sur la base de cinquièmes informations de contexte en provenance de l'au moins un dispositif, qu'un contexte du premier utilisateur est le second contexte défini par le profil de contexte d'utilisateur ;
en réponse à la détection (925, OUI) du fait que le contexte du premier utilisateur correspond au second contexte défini par le profil de contexte d'utilisateur, suspendre (930) le second message en vue de sa distribution ultérieure au second utilisateur et fournir (935) au premier utilisateur une seconde notification indiquant que le second message n'a pas été distribué, sur la base du profil de contexte d'utilisateur.

2. Procédé selon la revendication 1,
la première notification indiquant un ou plusieurs autres contextes préférés par le premier utilisateur ; et
le procédé consistant à :
recevoir, en provenance du second utilisateur, une indication d'un contexte de distribution parmi le ou les autres contextes ;
déterminer (725, NON), sur la base des quatrièmes informations de contexte, que le contexte actuel du premier utilisateur ne correspond pas au contexte défini par le profil de contexte d'utilisateur ; et
distribuer (740) le message à l'au moins un dispositif du premier utilisateur sur la base de la détermination du fait que le contexte actuel ne correspond pas au contexte défini par le profil de contexte d'utilisateur.

3. Procédé selon la revendication 1, la première notification comprenant des informations décrivant un ou plusieurs aspects du premier contexte défini par le profil de contexte d'utilisateur.

4. Procédé selon la revendication 1, la première notification comprenant un contexte suggéré pour l'envoi du premier message au premier utilisateur.

5. Procédé selon la revendication 1, consistant en outre à :
provoquer (745) la présentation, par l'au moins un dispositif, d'une interface de configuration qui comprend une description du profil de contexte d'utilisateur ; et
recevoir (760) une entrée pour activer le profil de contexte d'utilisateur pour la distribution de messages au premier utilisateur, l'activation du profil de contexte d'utilisateur pour la distribution de messages étant en réponse à l'entrée.

6. Procédé selon la revendication 5, l'interface de configuration comprenant en outre un ensemble de profils de contexte d'utilisateur pour l'activation de la distribution de messages au premier utilisateur.

7. Procédé selon la revendication 5, consistant en outre à :
recevoir (750) un ou plusieurs paramètres de configuration d'utilisateur pour le profil de contexte d'utilisateur spécifié par le premier utilisateur au moyen de l'interface de configuration ; et
configurer (755) le profil de contexte d'utilisateur selon le ou les paramètres de configuration d'utilisateur.

8. Procédé selon la revendication 7, le ou les paramètres de configuration d'utilisateur spécifiant un ou plusieurs éléments parmi : si les expéditeurs de message sont notifiés lorsqu'un message est suspendu en vue d'une distribution ultérieure ; si les expéditeurs de message se voient fournir des informations sur le contexte défini par un profil de contexte d'utilisateur ; si les expéditeurs de message se voient fournir des informations sur le contexte actuel du premier utilisateur ; et les informations qui sont fournies aux expéditeurs de message concernant le profil de contexte d'utilisateur ou le contexte actuel du premier utilisateur.

9. Procédé selon la revendication 7,
le ou les paramètres de configuration d'utilisateur comprenant une modification d'un ou plusieurs aspects du profil de contexte d'utilisateur ; et
la configuration du profil de contexte d'utilisateur consistant à modifier le profil de contexte d'utilisateur.

10. Procédé selon la revendication 1, la génération du profil de contexte d'utilisateur consistant à déduire un ou plusieurs aspects du profil de contexte d'utilisateur au moyen d'un apprentissage automatique.

11. Procédé selon la revendication 1, consistant en outre à obtenir des informations de contexte du premier utilisateur auprès de l'au moins un dispositif du premier utilisateur.

12. Système comprenant :
un ou plusieurs processeurs matériels (1104) ; et
au moins une mémoire (1106) stockant des instructions qui amènent le ou les processeurs matériels (1104) à réaliser le procédé selon la revendication 1.

13. Système selon la revendication 12,
la première notification indiquant un ou plusieurs autres contextes préférés par le premier utilisateur ; et
les opérations consistant à :
recevoir, en provenance du second utilisateur, une indication d'un contexte de distribution parmi le ou les autres contextes ;
déterminer (725, NON), sur la base des quatrièmes informations de contexte, que le contexte actuel du premier utilisateur ne correspond pas au contexte défini par le profil de contexte d'utilisateur ; et
distribuer (740) le message à l'au moins un dispositif du premier utilisateur sur la base de la détermination du fait que le contexte actuel ne correspond pas au contexte défini par le profil de contexte d'utilisateur.

14. Système selon la revendication 12, la notification comprenant des informations décrivant un ou plusieurs aspects du contexte défini par le profil de contexte d'utilisateur.

15. Support lisible par machine, stockant des instructions qui, lorsqu'elles sont exécutées par un système informatique, amènent le système informatique à réaliser le procédé selon la revendication **1.**
